(19)

Europäisches
Patentamt
European
Patent Office
Office européen
des brevets

(11) **EP 4 604 637 A1**

(12) **EUROPEAN PATENT APPLICATION**
published in accordance with Art. 153(4) EPC

(43) Date of publication:
**20.08.2025 Bulletin 2025/34**

(21) Application number: **23870621.2**

(22) Date of filing: **22.09.2023**

(51) International Patent Classification (IPC):
**H04W 72/04** (2023.01)

(52) Cooperative Patent Classification (CPC):
**H04L 5/00; H04W 72/04; H04W 72/044**

(86) International application number:
**PCT/CN2023/120648**

(87) International publication number:
**WO 2024/067390 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 CN 202211173549**

(71) Applicant: **Apogee Networks, LLC
Dallas, TX 75201 (US)**

(72) Inventors:
• **WU, Keying
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATION**

(57) The present application discloses a method and apparatus used in a node for wireless communication. A first node receives a first information set and first signaling, quits transmitting a first signal in a first time-frequency resource block, and transmits a second signal in a second time-frequency resource block or quits transmitting the second signal in the second time-frequency resource block. The first information set is used for determining the first time-frequency resource block and the second time-frequency resource block; the first signaling is used for determining a third time-frequency resource block; every two of the first time-frequency resource block, the second time-frequency resource block, and the third time-frequency resource block overlap in a time domain; a first reference signal resource group is used for determining a transmitting antenna port of the first signal, and a second reference signal resource group is used for determining a transmitting antenna port of the second signal; whether to quit transmitting the second signal in the second time-frequency resource block depends on the first information set. The method improves the uplink transmission efficiency, and also ensures the reliability of uplink transmission.

FIG. 1

EP 4 604 637 A1

## Description

## Technical Field

The present application relates to a transmission method and apparatus in a wireless communication system, and in particular to a method and apparatus for transmitting wireless signals in a wireless communication system supporting a cellular network.

## Background Art

Multi-antenna technology is a key technology in a 3rd generation partner project (3GPP) long-term evolution (LTE) system and a new radio (NR) system. Additional spatial degrees of freedom are obtained by configuring multiple antennas at communication nodes, such as base stations or user equipment (UE). Multiple antennas, through beamforming, form beams pointing to a specific direction to improve communication quality. When multiple antennas belong to multiple transmitter receiver points (TRP)/panels, additional diversity gain can be obtained by using the spatial differences between different TRPs/panels. In NR Release (R) 16, transmission based on multiple beams/TRPs/panels was introduced to enhance the quality of downlink data transmission. In NR R17, uplink transmission based on multiple beams/TRPs/panels is supported to improve the reliability of uplink transmission. In R17, one UE can be configured with multiple codebook-based or non-codebook-based sounding reference signal (SRS) resource sets, with different SRS resource sets corresponding to different beams/TRPs/panels, which are used for implementing uplink transmission of multiple beams/TRPs/panels.

In 3GPP, when different uplink channels/signals overlap in a time domain, a common method to resolve the overlap is to quit the transmission of some uplink channels/signals, so as to meet the power limitation of uplink transmission and/or reduce a PAPR.

## Summary of the Invention

In NR R18, simultaneous multi-beam/TRP/panel uplink (UL) transmission is discussed. Compared with a time division multiplexing method used in R17, this implementation method is more beneficial for increasing throughput, especially for users with better channel quality. Through research, the applicant has found that the introduction of this transmission mode will have an impact on resolving the overlap between uplink channels/signals.

In view of the above-mentioned problem, the present application discloses a solution. It should be noted that although the above-mentioned description uses cellular networks, uplink transmission and multi-beam/TRP/panel transmission as examples, the present application is also applicable to other scenarios such as sidelink transmission, downlink transmission and single beam/TRP/panel transmission and achieves similar technical effects to those in cellular networks, uplink transmission and multi-beam/TRP/panel transmission. In addition, using a unified solution for different scenarios (including but not limited to cellular networks, sidelinks, uplink transmission, downlink transmission, multi-beam/TRP/panel transmission and single beam/TRP/panel transmission) helps reduce hardware complexity and cost. In an absence of conflict, embodiments and features in the embodiments in a first node of the present application can be applied to a second node, and vice versa. In an absence of conflict, embodiments and features in the embodiments of the present application may be combined with each other in any manner.

As one embodiment, the interpretation of the terminology in the present application is based on the definitions provided in the TS36 series of the 3GPP specifications.

As one embodiment, the interpretation of the terminology in the present application is based on the definitions provided in the TS38 series of the 3GPP specifications.

As one embodiment, the interpretation of the terminology in the present application is based on the definitions provided in the TS37 series of the 3GPP specifications.

As one embodiment, the interpretation of the terminology in the present application is based on the definitions in the Institute of Electrical and Electronics Engineers (IEEE) standards.

The present application discloses a method used in a first node for wireless communication, comprising:

receiving a first information set, wherein the first information set is used for determining a first time-frequency resource block and a second time-frequency resource block, the first time-frequency resource block being allocated to a first signal, and the second time-frequency resource block being allocated to a second signal;

receiving a first signaling, wherein the first signaling is used for determining a third time-frequency resource block;

quitting transmitting the first signal in the first time-frequency resource block; and

transmitting the second signal in the second time-frequency resource block, or quitting transmitting the second signal in the second time-frequency resource block,

wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain;

a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

As one embodiment, characteristics of the above-mentioned method comprise: determining whether to transmit an uplink channel/signal based on characteristics of the uplink channel/signal that overlaps in a time domain.

As one embodiment, advantages of the above-mentioned method comprise: improving the uplink transmission efficiency, and also ensuring the reliability of uplink transmission.

According to one aspect of the present application, whether to quit transmitting the second signal in the second time-frequency resource block depends on whether the first signal and the second signal are scheduled by the same signaling.

According to one aspect of the present application, whether to quit transmitting the second signal in the second time-frequency resource block depends on whether the first signal and the second signal carry the same TB.

According to one aspect of the present application, any reference signal resource in the first reference signal resource group is one SRS resource, and any reference signal resource in the second reference signal resource group is one SRS resource; the first reference signal resource group belongs to a first SRS resource set, and the second reference signal resource group belongs to a second SRS resource set; the first SRS resource set and the second SRS resource set respectively comprise at least one SRS resource.

According to one aspect of the present application, the first signaling is used for determining a first index, and the first signal is associated with the first index.

According to one aspect of the present application, the method comprises:

transmitting a third signal in the third time-frequency resource block.

According to one aspect of the present application, a third reference signal resource group is used for determining a spatial relation of the third signal; and the third reference signal resource group comprises at least one reference signal resource.

According to one aspect of the present application, the first node comprises a piece of user equipment.

According to one aspect of the present application, the first node comprises one relay node.

The present application discloses a method used in a second node for wireless communication, comprising:

transmitting a first information set, wherein the first information set is used for determining a first time-frequency resource block and a second time-frequency resource block, the first time-frequency resource block being allocated to a first signal, and the second time-frequency resource block being allocated to a second signal; and

transmitting a first signaling, wherein the first signaling is used for determining a third time-frequency resource block,

wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; a target receiver of the first information set quits transmitting the first signal in the first time-frequency resource block; the target receiver of the first information set transmits the second signal in the second time-frequency resource block, or the target receiver of the first information set quits transmitting the second signal in the second time-frequency resource block; whether to quit transmitting the second signal in the second time-frequency resource block depends on the first information set.

According to one aspect of the present application, whether the target receiver of the first information set quits transmitting the second signal in the second time-frequency resource block depends on whether the first signal and the second signal are scheduled by the same signaling.

According to one aspect of the present application, whether the target receiver of the first information set quits transmitting the second signal in the second time-frequency resource block depends on whether the first signal and the second signal carry the same TB.

According to one aspect of the present application, any reference signal resource in the first reference signal resource group is one SRS resource, and any reference signal resource in the second reference signal resource group is one SRS resource; the first reference signal resource group belongs to a first SRS resource set, and the second reference signal resource group belongs to a second SRS resource set; the first SRS resource set and the second SRS resource set respectively comprise at least one SRS resource.

According to one aspect of the present application, the first signaling is used for determining a first index, and the first signal is associated with the first index.

According to one aspect of the present application, the method comprises:

receiving a third signal in the third time-frequency resource block.

According to one aspect of the present application, a third reference signal resource group is used for determining a spatial relation of the third signal; and the third reference signal resource group comprises at least one reference signal resource.

According to one aspect of the present application, the second node is a base station.

According to one aspect of the present application, the second node is a piece of user equipment.

According to one aspect of the present application, the second node is a relay node.

The present application discloses a first node used for wireless communication, comprising:

a first receiver receiving a first information set, wherein the first information set is used for determining a first time-frequency resource block and a second time-frequency resource block, the first time-frequency resource block being allocated to a first signal, and the second time-frequency resource block being allocated to a second signal;
the first receiver receiving a first signaling, wherein the first signaling is used for determining a third time-frequency resource block;
a first transmitter quitting transmitting the first signal in the first time-frequency resource block; and
the first transmitter transmitting the second signal in the second time-frequency resource block, or quits transmitting the second signal in the second time-frequency resource block,
wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

The present application discloses a second node used for wireless communication, comprising:

a second transmitter transmitting a first information set, wherein the first information set is used for determining a first time-frequency resource block and a second time-frequency resource block, the first time-frequency resource block being allocated to a first signal, and the second time-frequency resource block being allocated to a second signal; and the second transmitter transmitting a first signaling, wherein the first signaling is used for determining a third time-frequency resource block,
wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; a target receiver of the first information set quits transmitting the first signal in the first time-frequency resource block; the target receiver of the first information set transmits the second signal in the second time-frequency resource block, or the target receiver of the first information set quits transmitting the second signal in the second time-frequency resource block; whether to quit transmitting the second signal in the second time-frequency resource block depends on the first information set.

As one embodiment, compared with a traditional solution, the present application has the following advantages:

improving the uplink transmission efficiency; and
ensuring the reliability of uplink transmission.

**Brief Description of the Drawings**

By referring to the detailed description of the non-limiting embodiments with reference to the drawings, other features, objectives and advantages of the present application will become more apparent:

FIG. 1 shows a flowchart of a first information set, a first signaling, a first signal and a second signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;

FIG. 4 shows a schematic diagram of a first communication device and a second communication device according to one embodiment of the present application;

FIG. 5 shows a flowchart of transmission between a first node and a second node according to one embodiment of the present application;

FIG. 6 shows a schematic diagram of a first information set according to one embodiment of the present application;

FIG. 7 shows a schematic diagram of a first information set according to one embodiment of the present application;

FIG. 8 shows a schematic diagram of whether to quit transmitting a second signal in a second time-frequency resource block depending on whether a first signal and a second signal are scheduled by the same signaling according to one embodiment of the present application;

FIG. 9 shows a schematic diagram of whether to quit transmitting the second signal in the second time-frequency resource block depending on whether the first signal and the second signal carry the same TB according to one embodiment of the present application;

FIG. 10 shows a schematic diagram of a first reference signal resource group and a second reference signal resource group according to one embodiment of the present application;

FIG. 11 shows a schematic diagram of a first signaling being used for determining a first index according to one embodiment of the present application;

FIG. 12 shows a schematic diagram of a third reference signal resource group being used for determining a spatial relation of a third signal according to one embodiment of the present application;

FIG. 13 shows a schematic diagram of the third reference signal resource group and the first reference signal resource group belonging to the same reference signal resource set in M reference signal resource sets according to one embodiment of the present application;

FIG. 14 shows a structural block diagram of a processing apparatus in a first node according to one embodiment of the present application; and

FIG. 15 shows a structural block diagram of a processing apparatus in a second node according to one embodiment of the present application.

## Detailed Description of Embodiments

The technical solution of the present application will be further described in detail below in conjunction with the drawings. It should be noted that, in an absence of conflict, embodiments and features in the embodiments of the present application can be arbitrarily combined with each other.

## Embodiment 1

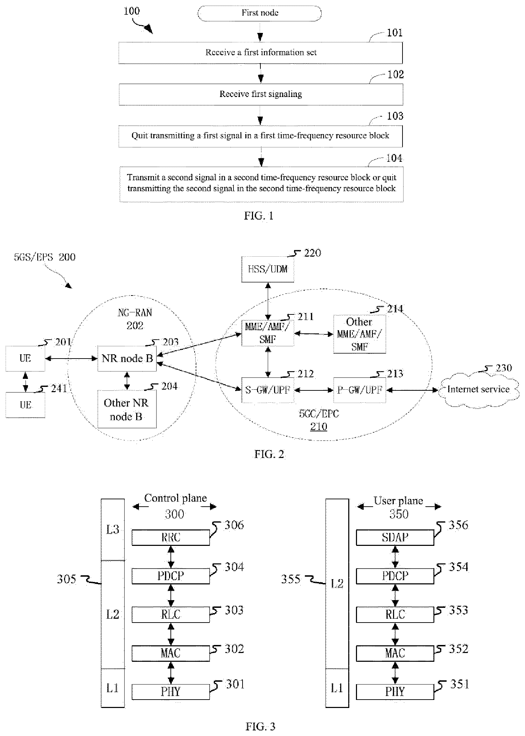

Embodiment 1 illustrates a flowchart of a first information set, a first signaling, a first signal and a second signal according to one embodiment of the present application, as shown in FIG. 1. In 100 shown in FIG. 1, each box represents one step. In particular, the order of steps in the boxes does not represent a specific time sequence relation between the steps.

In Embodiment 1, the first node in the present application receives a first information set in step 101; receives a first signaling in step 102; quits transmitting a first signal in a first time-frequency resource block in step 103; and transmits a second signal in a second time-frequency resource block in step 104, or quits transmitting the second signal in the second time-frequency resource block, wherein the first information set is used for determining the first time-frequency resource block and the second time-frequency resource block, the first time-frequency resource block being allocated to the first signal, and the second time-frequency resource block being allocated to the second signal; the first signaling is used for determining a third time-frequency resource block; the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

As one embodiment, the first information set is carried by a physical layer signaling.

As one embodiment, the first information set is carried by a layer 1 (L1) signaling.

As one embodiment, the first information set is carried by downlink control information (DCI).

As one embodiment, the first information set is carried by at least a piece of DCI.

As one embodiment, the first information set is carried by only a piece of DCI.

As one embodiment, the first information set is carried by two pieces of DCI.

As one embodiment, the first information set comprises information in one or more DCI fields in at least a piece of DCI.

As one embodiment, the first information set comprises information in one or more DCI fields in each of two pieces of DCI.

As one embodiment, the first information set comprises all information in each of two pieces of DCI.

As one embodiment, the first information set is carried by a higher-layer signaling.

As one embodiment, the first information set is carried by a radio resource control (RRC) signaling.

As one embodiment, the first information set is carried by an RRC information element (IE).

As one embodiment, the first information set is carried by only one RRC IE.

As one embodiment, the first information set is carried by two RRC IEs.

As one embodiment, the first information set is carried by a medium access control layer control element (MAC CE).

As one embodiment, the first information set is carried jointly by an RRC IE and a MAC CE.

As one embodiment, the first information set is carried jointly by a higher-layer signaling and DCI.

As one embodiment, the first information set is carried by at least one RRC IE and at least a piece of DCI.

As one embodiment, the first time-frequency resource block comprises one symbol or multiple continuous symbols in a time domain.

As one embodiment, the first time-frequency resource block comprises one or more resource blocks (RB) in a frequency domain.

As one embodiment, the first time-frequency resource block comprises multiple continuous RBs in the frequency domain.

As one embodiment, the first time-frequency resource block comprises multiple discontinuous RBs in the frequency domain.

As one embodiment, the second time-frequency resource block comprises one symbol or multiple continuous symbols in the time domain.

As one embodiment, the second time-frequency resource block comprises one or more RBs in the frequency domain.

As one embodiment, the second time-frequency resource block comprises multiple continuous RBs in the frequency domain.

As one embodiment, the second time-frequency resource block comprises multiple discontinuous RBs in the frequency domain.

As one embodiment, the RB comprises a physical resource block (PRB).

As one embodiment, the RB refers to a PRB.

As one embodiment, the symbol comprises an orthogonal frequency division multiplexing (OFDM) symbol.

As one embodiment, the symbol comprises a discrete Fourier transform spread-OFDM (DFT-S-OFDM) symbol.

As one embodiment, the symbol is obtained after the output of a transform precoder undergoes the generation of an OFDM symbol.

As one embodiment, the symbol refers to an OFDM symbol.

As one embodiment, the first time-frequency resource block and the second time-frequency resource block completely overlap in a time domain.

As one embodiment, the first time-frequency resource block and the second time-frequency resource block partially overlap in the time domain.

As one embodiment, the first time-frequency resource block and the second time-frequency resource block are orthogonal in a frequency domain.

As one embodiment, the first time-frequency resource block and the second time-frequency resource block overlap in the frequency domain.

As one embodiment, the first time-frequency resource block and the second time-frequency resource block partially overlap in the frequency domain.

As one embodiment, the first time-frequency resource block and the second time-frequency resource block completely overlap in the frequency domain.

As one embodiment, the first time-frequency resource block and the second time-frequency resource block overlap in a time-frequency domain.

As one embodiment, the first time-frequency resource block and the second time-frequency resource block partially overlap in the time-frequency domain.

As one embodiment, the first time-frequency resource block and the second time-frequency resource block completely overlap in the time-frequency domain.

As one embodiment, the first information set indicates the first time-frequency resource block and the second time-frequency resource block.

As one embodiment, the first information set comprises scheduling information of the first signal and scheduling information of the second signal.

As one embodiment, the scheduling information comprises one or more of a time domain resource, a frequency domain resource, a modulation and coding scheme (MCS), a demodulation reference signal (DMRS) port, a hybrid automatic repeat request (HARQ) process number, a transmission configuration indicator (TCI) state, a redundancy version (RV), a new data indicator (NDI), an antenna port, or a sounding reference signal resource indicator (SRI).

As one embodiment, the scheduling information comprises the number of transport blocks (TB) carried.

As one embodiment, the first information set comprises first sub-information and second sub-information, the first sub-information indicates time domain resources occupied by the first time-frequency resource block and time domain resources occupied by the second time-frequency resource block, and the second sub-information indicates frequency domain resources occupied by the first time-frequency resource block and frequency domain resources occupied by the second time-frequency resource block.

As one embodiment, the first sub-information and the second sub-information respectively comprise information in different DCI fields in the same DCI.

As one embodiment, the first sub-information and the second sub-information respectively comprise information in different fields in the same RRC IE.

As one embodiment, the first information set comprises a first information subset and a second information subset, the first information subset indicates the first time-frequency resource block, and the second information subset indicates the second time-frequency resource block.

As one embodiment, the first information subset and the second information subset respectively comprise information in two pieces of different DCI.

As one embodiment, the first information subset and the second information subset respectively comprise information in two different RRC IEs.

As one embodiment, the first information subset and the second information subset respectively comprise information in two ConfiguredGrantConfig IEs.

As one embodiment, the first signal and the second signal respectively comprise baseband signals.

As one embodiment, the first signal and the second signal respectively comprise wireless signals.

As one embodiment, the first signal and the second signal respectively comprise radio frequency signals.

As one embodiment, the first signal and the second signal respectively comprise different layers of the same PUSCH.

As one embodiment, the first signal and the second signal respectively comprise different layers of the same PUSCH scheduled by the same DCI.

As one embodiment, the first signal and the second signal respectively comprise different layers of the same PUSCH transmission based on a configured grant.

As one embodiment, the first signal and the second signal respectively comprise different PUSCH transmission occasions scheduled by the same DCI.

As one embodiment, the first signal and the second signal respectively comprise different PUSCH transmission occasions of the same PUSCH transmission based on the configured grant in the same period.

As one embodiment, the first signal and the second signal respectively comprise parts of the same PUSCH transmission occasion scheduled by the same DCI in different frequency domain resources.

As one embodiment, the first signal and the second signal respectively comprise parts of the same PUSCH transmission occasion of the same PUSCH transmission based on the configured grant in the same period, in different frequency domain resources.

As one embodiment, the first signal and the second signal respectively comprise PUSCH transmission scheduled by two pieces of different DCI.

As one embodiment, the first signal and the second signal respectively comprise PUSCH transmission based on the configured grant corresponding to different ConfiguredGrantConfigIndexes.

As one embodiment, transport channels corresponding to the first signal and the second signal are uplink shared channels (UL-SCH) respectively.

As one embodiment, the first signal and the second signal are PUSCH transmission based on a dynamic grant respectively.

As one embodiment, the first signal and the second signal are PUSCH transmission based on a configured grant respectively.

As one embodiment, the first signal and the second signal belong to the same carrier.

As one embodiment, the first signal and the second signal belong to the same bandwidth part (BWP).

As one embodiment, the first signal and the second signal belong to the same serving cell.

As one embodiment, the first signal and the second signal are respectively assigned different DMRS ports.

As one embodiment, the first signal and the second signal are respectively assigned different DMRS port numbers.

As one embodiment, the first time-frequency resource block and the second time-frequency resource block overlap in a time-frequency domain, and the first signal and the second signal are respectively assigned different DMRS ports or different DMRS port numbers.

As one embodiment, the first time-frequency resource block and the second time-frequency resource block are orthogonal in a frequency domain, and the first signal and the second signal are respectively assigned the same DMRS port or the same DMRS port number.

As one embodiment, the first signaling comprises a physical layer signaling.

As one embodiment, the first signaling comprises a layer 1 (L1) signaling.

As one embodiment, the first signaling comprises DCI.

As one embodiment, the first signaling comprises at least one DCI field.

As one embodiment, the first signaling is a piece of DCI.

As one embodiment, the first signaling comprises an RRC signaling.

As one embodiment, the first signaling is one RRC signaling.

As one embodiment, the first signaling comprises at least one RRC IE.

As one embodiment, the first signaling is one RRC IE.

As one embodiment, the first signaling comprises a MAC CE.

As one embodiment, the first signaling is one MAC CE.

As one embodiment, the first signaling comprises an RRC signaling and a MAC CE.

As one embodiment, the first signaling comprises a higher-layer signaling and DCI.

As one embodiment, the first signaling is used for scheduling a physical downlink shared channel (PDSCH).

As one embodiment, the first signaling comprises DCI, and a format of the first signaling is one of Format 1_0, Format 1_1 or Format 1_2.

As one embodiment, the first signaling is used for scheduling a PUSCH.

As one embodiment, the first signaling comprises DCI, and a format of the first signaling is one of Format 0_0, Format 0_1 or Format 0_2.

As one embodiment, a CRC of the first signaling is scrambled by one of a C-RNTI, an MCS-C-RNTI or a CS-RNTI.

As one embodiment, the first signaling comprises a ConfiguredGrantConfig IE.

As one embodiment, the first signaling is used for scheduling a physical sidelink control channel (PSCCH) and a physical sidelink shared channel (PSSCH).

As one embodiment, the first signaling comprises DCI, and a format of the first signaling is one of Format 3_0 or Format 3_1.

As one embodiment, the CRC of the first signaling is scrambled by a sidelink (SL)-RNTI or a SL-CS-RNTI.

As one embodiment, the first signaling is used for indicating an RB and a symbol in which the first node cancels uplink transmission.

As one embodiment, the first signaling comprises DCI format 2_4.

As one embodiment, the first signaling is DCI format 2_4.

As one embodiment, the CRC of the first signaling is scrambled by a cancellation indication (CI)-RNTI.

As one embodiment, the first signaling comprises a PUCCH-Config IE.

As one embodiment, the first signaling comprises information in all or part of fields in a PUCCH-Config IE.

As one embodiment, the first signaling comprises a SchedulingRequestResourceConfig IE.

As one embodiment, the first signaling comprises information in all or part of fields in the SchedulingRequestResourceConfig IE.

As one embodiment, the first signaling comprises information in all or part of fields in a BWP-Uplink-Dedicated IE.

As one embodiment, the first signaling comprises information in at least one of a PUCCH-Config field or a PUCCH-ConfigurationList field in the BWP-UplinkDedicated IE.

As one embodiment, the first signaling comprises information in all or part of fields in a ServingCell-Config IE.

As one embodiment, the first signaling comprises information in all or part of fields in a MAC-Cell-GroupConfig IE.

As one embodiment, the first signaling comprises information in at least one of a schedulingRequestID-LBT-SCell field, a schedulingRequestID-BFR-SCell field, a schedulingRequestID-BFR field, a schedulingRequestID-BFR2 field or a schedulingRequestConfig-v1700 field in the MAC-CellGroupConfig IE.

As one embodiment, the first signaling comprises information in all or part of fields in a SchedulingRequestConfig IE.

As one embodiment, the first signaling comprises information in all or part of fields in a LogicalChannelConfig IE.

As one embodiment, the first signaling comprises information in a schedulingRequestID field in the LogicalChannelConfig IE.

As one embodiment, the first signaling and the first information set are transmitted in the same BWP.

As one embodiment, the first signaling and the first information set are transmitted in the same serving cell.

As one embodiment, the first signaling and the first information set are transmitted in different BWPs.

As one embodiment, the first signaling and the first information set are transmitted in different serving cells.

As one embodiment, the first signaling is earlier than the first information set.

As one embodiment, the first signaling is later than the first information set.

As one embodiment, the first signaling is earlier than a part of information in the first information set and later than another part of information in the first information set.

As one embodiment, the third time-frequency resource block comprises one symbol or multiple continuous symbols in a time domain.

As one embodiment, the third time-frequency resource block comprises one or more RBs in a frequency domain.

As one embodiment, the third time-frequency resource block comprises multiple continuous RBs in the frequency domain.

As one embodiment, the third time-frequency resource block comprises multiple discontinuous RBs in the frequency domain.

As one embodiment, the third time-frequency resource block comprises one physical uplink control channel (PUCCH) resource.

As one embodiment, the third time-frequency resource block is one PUCCH resource.

As one embodiment, the third time-frequency resource block is allocated to a PUSCH.

As one embodiment, the third time-frequency resource block is allocated to a PSCCH and a PSSCH.

As one embodiment, the third time-frequency resource block comprises RBs and symbols in which the first node cancels uplink transmission.

As one embodiment, RBs comprised in the third time-frequency resource block are RBs in which the first node cancels uplink transmission, and symbols comprised in the third time-frequency resource block are symbols in which the first node cancels uplink transmission.

As one embodiment, the first signaling indicates the third time-frequency resource block.

As one embodiment, the first signaling is DCI used for scheduling a PDSCH, and a DCI field PUCCH resource indicator and a DCI field PDSCH-to-HARQ_feedback timing indicator of the first signaling are used for indicating the third time-frequency resource block.

As one embodiment, the first signaling is DCI used for scheduling the PUSCH, and DCI field Frequency domain resource assignment and DCI field Time domain resource assignment of the first signaling are used for indicating the third time-frequency resource block.

As one embodiment, the first signaling is DCI used for scheduling the PSCCH and the PSSCH, and DCI field SCI format 1-A fields of the first signaling are used for indicating the third time-frequency resource block.

As one embodiment, the first signaling is DCI used for scheduling the PSCCH and the PSSCH, and DCI field Frequency resource assignment and DCI field Time resource assignment of the first signaling are used for indicating the third time-frequency resource block.

As one embodiment, the first signaling indicates a first bitmap and a second bitmap, the first bitmap indicates symbols comprised in the third time-frequency resource block, and the second bitmap indicates RBs comprised in the third time-frequency resource block.

As one embodiment, the third time-frequency resource block and the first time-frequency resource block overlap in a time-frequency domain.

As one embodiment, at least one resource element (RE) in the first time-frequency resource block belongs to the third time-frequency resource block.

As one embodiment, at least one RE in the first time-frequency resource block belongs to one symbol indicated by the first bitmap in a time domain and belongs to one RB indicated by the second bitmap in a frequency domain.

As one embodiment, the third time-frequency resource block and the second time-frequency resource block overlap in the time-frequency domain.

As one embodiment, at least one RE in the second time-frequency resource block belongs to the third time-frequency resource block.

As one embodiment, at least one RE in the second time-frequency resource block belongs to one symbol indicated by the first bitmap in the time domain and belongs to one RB indicated by the second bitmap in the frequency domain.

As one embodiment, a priority of the first signal is lower than a reference priority.

As one sub-embodiment of the above-mentioned embodiment, the first signaling is used for determining the reference priority.

As one sub-embodiment of the above-mentioned embodiment, the reference priority is determined by the first node itself.

As one sub-embodiment of the above-mentioned embodiment, the reference priority is default.

As one sub-embodiment of the above-mentioned embodiment, the reference priority is defaulted to a corresponding priority index (priority index) 0.

As one sub-embodiment of the above-mentioned embodiment, the reference priority is defaulted to a corresponding priority index (priority index) 1.

As one sub-embodiment of the above-mentioned embodiment, the reference priority is a priority of the third signal.

As one embodiment, the meaning of "one priority is lower than another priority" comprises: a priority index of the one priority is less than a priority index of the another priority.

As one embodiment, the meaning of "one priority is lower than another priority" comprises: the priority index of the one priority is greater than the priority index of the another priority.

As one embodiment, a priority of the second signal is the same as the priority of the first signal.

As one embodiment, the second signal and the first signal are scheduled by the same signaling, and a priority of the second signal is the same as the priority of the first signal; the same signaling is used for determining the priority of the second signal and the priority of the first signal.

As one embodiment, the second signal and the first signal are respectively scheduled by two different signalings, and the priority of the second signal and the priority of the first signal are indicated respectively.

As one embodiment, the first reference signal resource group comprises only one reference signal resource.

As one embodiment, the first reference signal resource group comprises multiple reference signal resources.

As one embodiment, the first reference signal resource group comprises sounding reference signal (SRS) resources.

As one embodiment, any reference signal resource in the first reference signal resource group is one SRS resource.

As one embodiment, the first reference signal resource group comprises one reference signal resource that is one SRS resource.

As one embodiment, the first reference signal resource group is one SRS resource set.

As one embodiment, the first reference signal resource group consists of one SRS resource.

As one embodiment, the first reference signal resource group comprises a channel state information-reference signal (CSI-RS) resource.

As one embodiment, any reference signal resource in the first reference signal resource group is one CSI-RS resource.

As one embodiment, the first reference signal resource group comprises one reference signal resource that is one CSI-RS resource.

As one embodiment, the first reference signal resource group comprises a synchronisation signal/physical broadcast channel (SS/PBCH) block resource.

As one embodiment, the first reference signal resource group comprises one reference signal resource that is one SS/PBCH block resource.

As one embodiment, the second reference signal resource group comprises only one reference signal resource.

As one embodiment, the second reference signal resource group comprises multiple reference signal resources.

As one embodiment, the second reference signal resource group comprises SRS resources.

As one embodiment, any reference signal resource in the second reference signal resource group is one SRS resource.

As one embodiment, the second reference signal resource group comprises one reference signal resource that is one SRS resource.

As one embodiment, the second reference signal resource group is one SRS resource set.

As one embodiment, the second reference signal resource group consists of one SRS resource.

As one embodiment, the second reference signal resource group comprises CSI-RS resources.

As one embodiment, any reference signal resource in the second reference signal resource group is one CSI-RS resource.

As one embodiment, the second reference signal resource group comprises one reference signal resource that is one CSI-RS resource.

As one embodiment, the second reference signal resource group comprises SS/PBCH block resources.

As one embodiment, the second reference signal resource group comprises one reference signal resource that is one SS/PBCH block resource.

As one embodiment, the first reference signal resource group consists of one or more SRS resources; a transmitting antenna port of the first signal is the same antenna port as an SRS port of an SRS resource in the first reference signal resource group.

As one embodiment, the second reference signal resource group consists of one or more SRS resources; the transmitting antenna port of the second signal is the same antenna port as an SRS port of an SRS resource in the second reference signal resource group.

As one embodiment, the second reference signal resource group consists of one or more SRS resources; the second signal is transmitted by the same antenna port as the SRS port of the SRS resource in the second reference signal resource group.

As one embodiment, a spatial domain filter for transmitting the first signal is the same as a spatial domain filter used by the first node to transmit or receive a reference signal in the first reference signal resource group.

As one embodiment, a spatial domain filter for transmitting the second signal is the same as the spatial domain filter used by the first node to transmit or receive the reference signal in the second reference signal resource group.

As one embodiment, the first node transmits the second signal and a reference signal transmitted or received in the second reference signal resource group using the same spatial domain filter.

As one embodiment, a precoder of the first signal is the same as a precoder of a reference signal transmitted in the first reference signal resource group.

As one embodiment, a precoder of the second signal is the same as a precoder of the reference signal transmitted in the second reference signal resource group.

As one embodiment, the meaning of the sentence "a first reference signal resource group is used for determining a transmitting antenna port of the first signal" comprises: the transmitting antenna port of the first signal is the same antenna port as an SRS port of an SRS resource in the first reference signal resource group.

As one embodiment, the meaning of the sentence "a first reference signal resource group is used for determining a transmitting antenna port of the first signal" comprises: a spatial domain filter for transmitting the first signal is the same as the spatial domain filter used by the first node to transmit or receive a reference signal in the first reference signal resource group.

As one embodiment, the meaning of the sentence "a first reference signal resource group is used for determining a transmitting antenna port of the first signal" comprises: the first reference signal resource group is used for determining a spatial relation of the first signal.

As one embodiment, the meaning of the sentence "a second reference signal resource group is used for determining a transmitting antenna port of the second signal" comprises: a transmitting antenna port of the second signal is the same antenna port as an SRS port of an SRS resource in the second reference signal resource group.

As one embodiment, the meaning of the sentence "a second reference signal resource group is used for determining a transmitting antenna port of the second signal" comprises: a spatial domain filter for transmitting the second signal is the same as the spatial domain filter used by the first node to transmit or receive the reference signal in the second reference signal resource group.

As one embodiment, the meaning of the sentence "a second reference signal resource group is used for determining a transmitting antenna port of the second signal" comprises: the second reference signal resource group is used for determining a spatial relation of the second signal.

As one embodiment, the first reference signal resource group is indicated by an SRI in scheduling information of the first signal.

As one embodiment, the second reference signal resource group is indicated by an SRI in scheduling information of the second signal.

As one embodiment, the first information set is used for determining the first reference signal resource group and the second reference signal resource group.

As one embodiment, the first information set indicates the first reference signal resource group and the second reference signal resource group.

As one embodiment, the first information set comprises the first reference signal resource group and the second reference signal resource group.

As one embodiment, any reference signal resource in the first reference signal resource group and any reference signal resource in the second reference signal resource group are not quasi co-located.

As one embodiment, any reference signal resource in the first reference signal resource group and any reference signal resource in the second reference signal resource group are not quasi co-located corresponding to Quasi Co-Location (QCL)-typeD.

As one embodiment, the first reference signal resource group comprises only one reference signal resource, and the second reference signal resource group comprises only one reference signal resource; the one reference signal resource comprised in the first reference signal resource group and the one reference signal resource comprised in the second reference signal resource group are not quasi co-located.

As one sub-embodiment of the above-mentioned embodiment; the one reference signal resource comprised in the first reference signal resource group and the one reference signal resource comprised in the second reference signal resource group are not quasi co-located corresponding to QCL-typeD.

As one embodiment, the number of the transmitting antenna ports of the first signal is equal to 1 or greater than 1.

As one embodiment, the number of the transmitting antenna ports of the second signal is equal to 1 or greater than 1.

As one embodiment, the first information set is used for determining whether to quit transmitting the second signal in the second time-frequency resource block.

As one embodiment, the first information set is used by the first node for determining whether to quit transmitting the second signal in the second time-frequency resource block.

As one embodiment, the first node transmits the second signal in the second time-frequency resource block.

As one embodiment, the first node quits transmitting the second signal in the second time-frequency resource block.

## Embodiment 2

Embodiment 2 illustrates a schematic diagram of a network architecture according to one embodiment of the present application, as shown in FIG. 2.

FIG. 2 illustrates a network architecture 200 of long-term evolution (LTE), long-term evolution advanced (LTE-A) and future 5G systems. The network architecture 200 of LTE, LTE-A and future 5G systems is called an evolved packet system (EPS) 200. The 5G NR or LTE network architecture 200 may be referred to as a 5G system (5GS)/evolved packet system (EPS) 200 or some other suitable terminologies. The 5GS/EPS 200 may comprise one or more pieces of user equipment (UE) 201, one UE241 communicating with the UE201 via a sidelink, a next-generation radio access network (NG-RAN) 202, a 5G CoreNetwork (5GC)/evolved packet core (EPC) 210, a home subscriber server (HSS)/unified data management (UDM) 220, and an Internet service 230. The 5GS/EPS200 may be interconnected with other access networks, but these entities/interfaces are not shown for simplicity. As shown in FIG. 2, the 5GS/EPS200 provides packet switching services, but those skilled in the art will readily appreciate that the various concepts presented throughout the present application can be extended to networks that provide circuit switching services. The NG-RAN202 comprises New Radio (NR) Node B (gNB) 203 and other gNBs 204. The gNB203 provides user and control plane protocol terminations toward the UE201. The gNB203 can be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a transmitter receiver point (TRP), or some other suitable terminologies. The gNB203 provides an access point to the 5GC/EPC210 for the UE201. Examples of the UE201 comprise a cellular phone, a smartphone, a Session Initiation Protocol (SIP) phone, a laptop computer, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises a mobility management entity (MME)/authentication management field (AMF)/session management function (SMF) 211, other MME/AMF/SMF214, a service gateway (S-GW)/user plane function (UPF) 212, and a packet data network gateway (P-GW)/UPF213. The MME/AMF/SMF211 is a control node that handles signalings between the UE201 and the 5GC/EPC210. Generally, the MME/AMF/SMF211 provides bearer and connection management. All user Internet protocol (IP) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet Protocol services, which may specifically comprise Internet, intranet, IP multimedia subsystem (IMS) and packet switching services.

As one embodiment, the first node in the present application comprises the UE201.

As one embodiment, the second node in the present application comprises the gNB203.

As one embodiment, a radio link between the UE201 and the gNB203 comprises a cellular network link.

As one embodiment, a sender of the first information set comprises the gNB203.

As one embodiment, a recipient of the first information set comprises the UE201.

As one embodiment, a sender of the first signaling comprises the gNB203.

As one embodiment, a recipient of the first signaling comprises the UE201.

As one embodiment, a sender of the second signal comprises the UE201.

As one embodiment, a recipient of the second signal comprises the gNB203.

As one embodiment, the UE201 supports simultaneous multi-beam/panel/TRP UL transmission.

As one embodiment, the gNB203 supports simultaneous multi-beam/panel/TRP UL transmission.

## Embodiment 3

Embodiment 3 illustrates a schematic diagram of an embodiment of a radio protocol architecture for a user plane and a control plane according to one embodiment of the present application, as shown in FIG. 3.

Embodiment 3 illustrates a schematic diagram of an embodiment of the radio protocol architecture of the user plane and the control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, a gNB, or an RSU in V2X) and a second communication node device (a gNB, UE, or an RSU in V2X), or between two pieces of UE, using three layers: layer 1, layer 2, and layer 3. Layer 1 (L1 layer) is the lowest layer and implements various physical layer (PHY) signal processing functions. The L1 layer will be referred to as a PHY301 herein. Layer 2 (L2 layer) 305 is above the PHY301 and is responsible for a link between the first communication node device and the second communication node device, or between two pieces of UE. The L2 layer 305 comprises a medium access control (MAC) sublayer 302, a radio link control (RLC) sublayer 303, and a packet data convergence protocol (PDCP) sublayer 304, which terminate at the second communication node device. The PDCP sublayer 304 provides multiplexing between different radio bearers and logical channels. The PDCP sublayer 304 also provides security by encrypting data packets, and provides inter-cell mobility support of the first communication node device with respect to the second communication node devices. The RLC sublayer 303 provides segmentation and reassembly of upper-layer data packets, retransmission of lost data packets, and reordering of data packets to compensate for out-of-order reception due to a HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. The radio resource control (RRC) sublayer 306 in layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises layer 1 (L1 layer) and layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for the upper-layer data packets to reduce radio transmission overhead. The L2 layer 355 in the user plane 350 also comprises a service data adaptation protocol (SDAP) sublayer 356, which is responsible for mapping between QoS flows and data radio bearers (DRBs) to support the diversity of services. Although not shown, the first communication node device may have several upper layers above the L2 layer 355, comprising a network layer (e.g., an IP layer) terminating at the P-GW on the network side and an application layer terminating at the other end of the connection (e.g., remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the first information set is generated in the RRC sublayer 306.

As one embodiment, the first information set is generated in the MAC sublayer 302 or the MAC sublayer 352.

As one embodiment, the first information set is generated in the PHY301 or the PHY351.

As one embodiment, a part of the first information set is generated in the RRC sublayer 306, and another part is generated in the PHY301 or the PHY351.

As one embodiment, a part of the first information set is generated in the RRC sublayer 306, and another part is generated in the MAC sublayer 302 or the MAC sublayer 352.

As one embodiment, a part of the first information set is generated in the MAC sublayer 302 or the MAC sublayer 352, and another part is generated in the PHY301 or the PHY351.

As one embodiment, the first signaling is generated in the PHY301 or the PHY351.

As one embodiment, the first signaling is generated in the MAC sublayer 302 or the MAC sublayer 352.

As one embodiment, the first signaling is generated in the RRC sublayer 306.

As one embodiment, the first signal is generated in the PHY301 or the PHY351.

As one embodiment, the second signal is generated in the PHY301 or the PHY351.

As one embodiment, the higher layer in the present application refers to a layer above a physical layer.

**Embodiment 4**

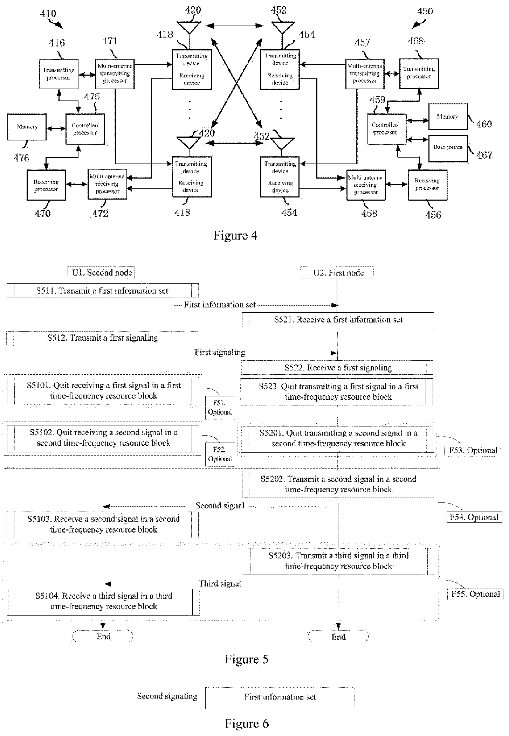

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper-layer data packets from a core network are provided to the controller/processor 475. The controller/processor 475 implements the functionality of the L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for the L1 layer (i.e., a physical layer). The transmitting processor 416 implements coding and interleaving to facilitate forward error correction (FEC) at the second communication device 450, and constellation mapping based on various modulation schemes (e.g., binary phase shift keying (BPSK), quadrature phase shift keying (QPSK), M-phase shift keying (M-PSK), M-quadrature amplitude modulation (M-QAM)). The multi-antenna transmitting processor 471 performs digital spatial precoding, comprising codebook-based precoding and noncodebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or frequency domain, and then uses an inverse fast Fourier transform (IFFT) to generate a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to a different antenna 420.

In transmission from the first communication device 410 to the second communication device 450, at the second communication device 450, each receiving device 454 receives a signal through a corresponding antenna 452 thereof. Each receiving device 454 recovers the information modulated onto the radio frequency carrier, converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from a time domain to a frequency domain. In the frequency domain, a physical layer data signal and a reference signal are demultiplexed by the receiving processor 456, wherein the reference signal will be used for a channel estimation, and the data signal is recovered after multi-antenna detection in the multi-antenna receiving processor 458 to any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on a physical channel. The upper-layer data and the control signals are then provided to the controller/processor 459. The controller/processor 459 implements the functions of the L2 layer. The controller/processor 459 may be associated with a memory 460 storing program codes and data. The memory 460 may be referred to as a computer-readable medium. In a DL, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to the L3 for L3 processing. The controller/processor 459 is also responsible for error detection using an acknowledgement (ACK) and/or negative acknowledgement (NACK) protocol to support HARQ operations.

In transmission from the second communication device 450 to the first communication device 410, at the second communication device 450, a data source 467 is used for providing upper-layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transport channels based on radio resource allocation of the first communication device 410, and implements L2 layer functions for the user plane and the control plane. The controller/processor 459 is also responsible for HARQ operations, retransmission of lost packets, and signalings to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 modulates a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In transmission from the second communication device 450 to the first communication device 410, a function of the first communication device 410 is similar to a receiving function of the second communication device 450 described in the transmission from the first communication device 410 to the second communication device 450. Each receiving device 418 receives a radio frequency signal through a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with a memory 476 storing program codes and data. The memory 476 may be referred to as a computer-readable medium. The controller/processor 475 provides demultiplexing between transport and logical channels, packet reassembly, decryption, header decompression and control signal processing to recover upper-layer data packets from the second communication device 450. The upper layer packets from the controller/processor 475 may be provided to the core network. The controller/processor 475 is also responsible for error detection using an ACK and/or NACK protocols to support HARQ operations.

As one embodiment, the second communication device 450 comprises: at least one processor and at least one memory, the at least one memory comprising computer program codes; the at least one memory and the computer program codes are configured to be used together with the at least one processor. The second communication device 450 apparatus at least receives the first information set, receives the first signaling, quits transmitting the first signal in the first time-frequency resource block, and transmits the second signal in the second time-frequency resource block, or quits transmitting the second signal in the second time-frequency resource block. The first information set is used for determining the first time-frequency resource block and the second time-frequency resource block, the first time-frequency resource block being allocated to the first signal, and the second time-frequency resource block being allocated to the second signal; the first signaling is used for determining the third time-frequency resource block; the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

As one embodiment, the second communication device 450 comprises: a memory storing a computer-readable instruction program, the computer-readable instruction program generates actions when executed by at least one processor, the action comprising: receiving the first information set; receiving the first signaling; quitting transmitting the first signal in the first time-frequency resource block; transmitting the second signal in the second time-frequency resource block, or quitting transmitting the second signal in the second time-frequency resource block.

As one embodiment, the first communication device 410 comprises: at least one processor and at least one memory, the at least one memory comprising computer program codes; the at least one memory and the computer program codes are configured to be used together with the at least one processor. The first communication device 410 apparatus at least transmits the first information set and transmits the first signaling. The first information set is used for determining a first time-frequency resource block and a second time-frequency resource block, the first time-frequency resource block being allocated to a first signal, and the second time-frequency resource block being allocated to a second signal; the first signaling is used for determining a third time-frequency resource block; the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; a target receiver of the first information set quits transmitting the first signal in the first time-frequency resource block; the target receiver of the first information set transmits the second signal in the second time-frequency resource block, or the target receiver of the first information set quits transmitting the second signal in the second time-frequency resource block; whether to quit transmitting the second signal in the second time-frequency resource block depends on the first information set.

As one embodiment, the first communication device 410 comprises: a memory storing a computer-readable instruction program, the computer-readable instruction program generates actions when executed by at least one processor, the action comprising: transmitting the first information set and transmitting the first signaling.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information set; at least one of {the antenna 420, the transmitting device 418, the transmitting processor 416, the multi-antenna transmitting processor 471, the controller/processor 475, and the memory 476} is used for transmitting the first information set.

As one embodiment, at least one of {the antenna 452, the receiving device 454, the receiving processor 456, the multi-antenna receiving processor 458, the controller/processor 459, the memory 460, and the data source 467} is used for receiving the first signaling; at least one of {the antenna 420, the transmitting device 418, the transmitting processor 416, the multi-antenna transmitting processor 471, the controller/processor 475, and the memory 476} is used for transmitting the first signaling.

As one embodiment, at least one of {the antenna 452, the transmitting device 454, the transmitting processor 468, the multi-antenna transmitting processor 457, the controller/processor 459, the memory 460, and the data source 467} is used for transmitting the second signal in the second time-frequency resource block; at least one of {the antenna 420, the receiving device 418, the receiving processor 470, the multi-antenna receiving processor 472, the controller/processor 475, and the memory 476} is used for receiving the second signal in the second time-frequency resource block.

As one embodiment, at least one of {the antenna 452, the transmitting device 454, the transmitting processor 468, the multi-antenna transmitting processor 457, the controller/processor 459, the memory 460, and the data source 467} is used for transmitting the third signal in the third time-frequency resource block; at least one of {the antenna 420, the receiving device 418, the receiving processor 470, the multi-antenna receiving processor 472, the controller/processor 475, and the memory 476} is used for receiving the third signal in the third time-frequency resource block.

## Embodiment 5

Embodiment 5 illustrates a flowchart of transmission between a first node and a second node according to one embodiment of the present application; as shown in FIG. 5. In FIG. 5, a second node U1 and a first node U2 are communication nodes transmitted via an air interface. In FIG. 5, steps in a boxes F51 to F55 are respectively optional.

The second node U1 transmits a first information set in step S511; transmits a first signaling in step S512; quits receiving a first signal in a first time-frequency resource block in step S5101; quits receiving a second signal in a second time-frequency resource block in step S5102; receives the second signal in the second time-frequency resource block in step S5103; and receives a third signal in a third time-frequency resource block in step S5104.

The first node U2 receives the first information set in step S521; receives the first signaling in step S522; quits transmitting the first signal in the first time-frequency resource block in step S523; quits transmitting the second signal in the second time-frequency resource block in step S5201; transmits the second signal in the second time-frequency resource block in step S5202; and transmits the third signal in the third time-frequency resource block in step S5203.

In Embodiment 5, the first information set is used by the first node U2 for determining the first time-frequency resource block and the second time-frequency resource block, the first time-frequency resource block being allocated to the first signal, and the second time-frequency resource block being allocated to the second signal; the first signaling is used by the first node U2 for determining the third time-frequency resource block; the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used by the first node U2 for determining a transmitting antenna port of the first signal, and a second reference signal resource group is used by the first node U2 for determining a transmitting antenna port of the second signal; the first reference signal resource group and the second reference signal resource group respectively comprise at least one reference signal resource; whether to quit transmitting the second signal in the second time-frequency resource block depends on the first information set.

As one embodiment, the first node U2 is the first node in the present application.

As one embodiment, the second node U1 is the second node in the present application.

As one embodiment, an air interface between the second node U1 and the first node U2 comprises a wireless interface between a base station device and user equipment.

As one embodiment, the air interface between the second node U1 and the first node U2 comprises a wireless interface between a relay node device and the user equipment.

As one embodiment, the air interface between the second node U1 and the first node U2 comprises a wireless interface between user equipment and user equipment.

As one embodiment, the second node U1 is a serving cell maintenance base station of the first node U2.

As one embodiment, the first information set is transmitted in a physical downlink control channel (PDCCH).

As one embodiment, the first information set is transmitted in one PDCCH.

As one embodiment, a part of the first information set is transmitted in one PDCCH, and another part of the first information set is transmitted in another PDCCH.

As one embodiment, the first information set is transmitted in a PDSCH.

As one embodiment, a part of the first information set is transmitted in a PDCCH, and another part of the first information set is transmitted in a PDSCH.

As one embodiment, the first signaling is transmitted in a PDCCH.

As one embodiment, the first signaling is transmitted in a PDSCH.

As one embodiment, a part of the first signaling is transmitted in a PDCCH, and another part of the first signaling is transmitted in a PDSCH.

As one embodiment, a physical layer channel corresponding to the first signal is a PUSCH.

As one embodiment, the physical layer channel corresponding to the second signal is a PUSCH.

As one embodiment, the first node transmits the second signal in the second time-frequency resource block, and the second signal is transmitted in a PUSCH.

As one embodiment, a physical layer channel corresponding to the first signal is a PUCCH.

As one embodiment, the physical layer channel corresponding to the second signal is a PUCCH.

As one embodiment, the physical layer channel corresponding to the first signal and the physical layer channel corresponding to the second signal are the same PUSCH.

As one embodiment, the physical layer channel corresponding to the first signal and the physical layer channel corresponding to the second signal are respectively two different PUSCHs.

As one embodiment, the first signal and the second signal respectively correspond to two different PUSCH transmission occasions.

As one embodiment, the step in box F51 in FIG. 5 exists, and the second node quits receiving the first signal in the first time-frequency resource block.

As one embodiment, the second node U1 receives the second signal in the second time-frequency resource block, or the second node U1 quits receiving the second signal in the second time-frequency resource block; whether the second node U1 quits receiving the second signal in the second time-frequency resource block depends on the first information set.

As one embodiment, the step in box F52 in FIG. 5 exists, and the second node U1 quits receiving the second signal in the second time-frequency resource block.

As one embodiment, the step in box F53 in FIG. 5 exists, and the first node U2 quits transmitting the second signal in the second time-frequency resource block.

As one embodiment, the steps in box F52 and box F53 in FIG. 5 both exist, the first node U2 quits transmitting the second signal in the second time-frequency resource block, and the second node U1 quits receiving the second signal in the second time-frequency resource block.

As one embodiment, the step in box F54 in FIG. 5 exists, the first node U2 transmits the second signal in the second time-frequency resource block, and the second node U1 receives the second signal in the second time-frequency resource block.

As one embodiment, the steps in box F52 and the steps in box F54 in FIG. 5 do not exist at the same time.

As one embodiment, the steps in box F53 and the steps in box F54 in FIG. 5 do not exist at the same time.

As one embodiment, the first node U2 transmits the second signal in the second time-frequency resource block, and the second node U1 receives the second signal in the second time-frequency resource block; or, the first node U2 quits transmitting the second signal in the second time-frequency resource block, and the second node U1 quits receiving the second signal in the second time-frequency resource block.

As one embodiment, the step in box F55 in FIG. 5 exists, the first node U2 transmits the third signal in the third time-frequency resource block; the second node U1 receives the third signal in the third time-frequency resource block.

As one embodiment, the third signal comprises a baseband signal.

As one embodiment, the third signal comprises a wireless signal.

As one embodiment, the third signal comprises a radio frequency signal.

As one embodiment, the third signal and the first signal belong to the same BWP.

As one embodiment, the third signal and the first signal belong to the same serving cell.

As one embodiment, the third time-frequency resource block is allocated to the third signal.

As one embodiment, the third signal is transmitted on a PUCCH.

As one embodiment, the third signal is transmitted on a PUSCH.

As one embodiment, the third signal is PUSCH transmission based on a dynamic grant.

As one embodiment, the third signal is PUSCH transmission based on a configured grant.

As one embodiment, the third signal comprises an SRS.

As one embodiment, the first signaling comprises configuration information of the third signal.

As one embodiment, the third signal is transmitted on a PUCCH, and the configuration information of the third signal comprises one or more of a time domain resource, a frequency domain resource, a PUCCH format, a spatial relation, a maximum code rate, a maximum payload size (maxPayloadSize), a cyclic shift, or an orthogonal cover code (OCC).

As one embodiment, the third signal is transmitted on a PUSCH, and the configuration information of the third signal comprises one or more of a time domain resource, a frequency domain resource, an MCS, a DMRS port, a HARQ process number, a TCI state, an RV, an NDI, an antenna port, or an SRI.

As one embodiment, the third signal comprises an SRS, and the configuration information of the third signal comprises one or more of a time domain resource, a frequency domain resource, "usage", a power control parameter, the number of SRS ports, the number of repetitions, an RS sequence, a spatial relation, or a cyclic shift.

As one embodiment, a priority of the third signal is higher than the priority of the first signal.

As one embodiment, a priority index of the third signal is higher than the priority index of the first signal.

As one embodiment, the priority index of the third signal is lower than the priority index of the first signal.

As one embodiment, the priority index of the third signal is equal to 1, and the priority index of the first signal is equal to 0.

As one embodiment, the first signaling is used for determining the priority of the third signal.

As one embodiment, the first signaling indicates the priority of the third signal.

As one embodiment, the third signal and the first signal are PUSCH transmission based on configured grants, respectively.

As one embodiment, the third signal is transmitted on a PUCCH, and the third signal carries a scheduling request (SR).

As one embodiment, the third signal is transmitted on a PUCCH, and the third signal carries a HARQ-ACK (Acknowledgement).

As one embodiment, the HARQ-ACK comprises an ACK.

As one embodiment, the HARQ-ACK comprises a NACK (Negative ACKnowledgement).

As one embodiment, the third signal is transmitted on a PUCCH, and the third signal carries a HARQ-ACK received only for a PDSCH without a PDCCH; the first signal comprises PUSCH transmission based on a configured grant.

As one embodiment, the third signal is transmitted on a PUCCH, and the third signal carries a HARQ-ACK received only for a PDSCH without a PDCCH; the first signal is transmitted on a PUSCH, and the first signal carries a semi-persistent (SP)-channel state information (CSI) report without a PDCCH.

As one embodiment, the third signal is transmitted on a PUCCH, and the first signal is transmitted on a PUSCH.

As one embodiment, the third signal comprises a HARQ-ACK for the first signaling.

As one embodiment, the first signaling is used for scheduling a fourth signal, and the third signal comprises a HARQ-ACK for the fourth signal.

As one sub-embodiment of the above-mentioned embodiment, the fourth signal is transmitted on a PDSCH.

**Embodiment 6**

Embodiment 6 illustrates a schematic diagram of a first information set according to one embodiment of the present application, as shown in FIG. 6. In Embodiment 6, the first information set is carried by only one signaling, namely a second signaling.

As one embodiment, the first information set is carried only by the second signaling.

As one embodiment, the first information set comprises all information in the second signaling.

As one embodiment, the first information set comprises information in one or more fields in the second signaling.

As one embodiment, the second signaling is used for scheduling the first signal and the second signal.

As one embodiment, the second signaling comprises scheduling information of the first signal and scheduling information of the second signal.

As one embodiment, the second signaling is used for scheduling a first physical uplink shared channel (PUSCH), the first signal and the second signal respectively comprise at least one layer of the first PUSCH, and the first signal and the second signal comprise different layers of the first PUSCH.

As one embodiment, the layer refers to a MIMO layer.

As one embodiment, the layer refers to a transmission layer.

As one embodiment, the second signaling is used for scheduling two PUSCH transmission occasions, the first signal comprises one of the two PUSCH transmission occasions, and the second signal comprises the other of the two PUSCH transmission occasions.

As one embodiment, the second signaling is used for scheduling one PUSCH transmission occasion, and the first signal and the second signal respectively comprise parts of the one PUSCH transmission occasion in different frequency domain resources.

As one sub-embodiment of the above-mentioned embodiment, the first time-frequency resource block and the second time-frequency resource block are mutually orthogonal in a frequency domain, the first signal comprises a part of the one PUSCH transmission occasion in the first time-frequency resource block, and the second signal comprises a part of the one PUSCH transmission occasion in the second time-frequency resource block.

As one embodiment, the second signaling comprises DCI.

As one embodiment, the second signaling is a piece of DCI.

As one embodiment, the second signaling comprises DCI, and the first information set comprises information in at least one DCI field of DCI field Time domain resource assignment and DCI field Frequency domain resource assignment of the second signaling.

As one embodiment, the second signaling comprises DCI, and the first information set comprises information in at least one DCI field of a DCI field Modulation and coding scheme, a DCI field New data indicator or a DCI field HARQ process number of the second signaling.

As one embodiment, the second signaling is used for scheduling at least one PUSCH.

As one embodiment, the second signaling is used for activating PUSCH transmission based on a configured grant.

As one embodiment, a cyclic redundancy check (CRC) of the second signaling is scrambled by a cell-radio network temporary identifier (C-RNTI).

As one embodiment, the CRC of the second signaling is scrambled by a modulation and coding scheme (MCS)-C-RNTI.

As one embodiment, the CRC of the second signaling is scrambled by a configured scheduling (CS)-RNTI.

As one embodiment, the second signaling comprises an RRC IE.

As one embodiment, the second signaling is one RRC IE.

As one embodiment, the second signaling is one ConfiguredGrantConfig IE.

As one embodiment, the second signaling is used for configuring PUSCH transmission based on a configured grant.

As one embodiment, the second signaling is used for configuring uplink transmission without a dynamic grant.

As one embodiment, the first information set comprises information in at least one field of a periodicity field, a timeDomainOffset field, a timeDomainAllocation field, a frequencyDomainAllocation field, or an mcsAndTBS field in the second signaling.

As one embodiment, the first information set comprises first sub-information, the first sub-information indicates a first symbol group, the first symbol group comprises at least one symbol; the first symbol group comprises time domain resources occupied by the first time-frequency resource block, and the first symbol group comprises time domain resources occupied by the second time-frequency resource block.

As one sub-embodiment of the above-mentioned embodiment, the time domain resources occupied by the first time-frequency resource block are the first symbol group.

As one sub-embodiment of the above-mentioned embodiment, the time domain resources occupied by the second time-frequency resource block are the first symbol group.

As one sub-embodiment of the above-mentioned embodiment, the first time-frequency resource block occupies only part of symbols in the first symbol group in a time domain.

As one sub-embodiment of the above-mentioned embodiment, the second time-frequency resource block occupies only part of symbols in the first symbol group in the time domain.

As one embodiment, the first information set comprises second sub-information, the second sub-information indicates a first RB group, the first RB group comprises at least one RB; the first RB group comprises frequency domain resources occupied by the first time-frequency resource block, and the first RB group comprises frequency domain resources occupied by the second time-frequency resource block.

As one sub-embodiment of the above-mentioned embodiment, the frequency domain resources occupied by the first time-frequency resource block are the first RB group.

As one sub-embodiment of the above-mentioned embodiment, the frequency domain resources occupied by the second time-frequency resource block are the first RB group.

As one sub-embodiment of the above-mentioned embodiment, the first time-frequency resource block occupies a part of RBs in the first RB group in a frequency domain, and the second time-frequency resource block occupies another part of RB in the first RB group in the frequency domain.

As one sub-embodiment of the above-mentioned embodiment, the first time-frequency resource block occupies the first N1 RBs in the first RB group in the frequency domain, and the second time-frequency resource block occupies the remaining (N-N1) RBs in the first RB group in the frequency domain, N1 and N are positive integers respectively, the N1 being less than the N, and the number of RBs comprised in the first RB group being equal to the N.

As one reference embodiment of the above-mentioned sub-embodiment, the N1 is equal to $\left\lceil \frac{N}{2} \right\rceil$.

As one reference embodiment of the above-mentioned sub-embodiment, the first N1 RBs refer to: N1 lowest RBs.

As one reference embodiment of the above-mentioned sub-embodiment, the first N1 RBs refer to: N1 lowest indexed RBs.

As one reference embodiment of the above-mentioned sub-embodiment, all RBs in the first RB group are arranged in order from low to high, and the first N1 RBs refer to: N1 RBs at the front.

As one sub-embodiment of the above-mentioned embodiment, the first time-frequency resource block occupies even precoding resource block groups (PRGs) in the first RB group in a frequency domain, and the second time-frequency resource block occupies odd PRGs in the first RB group in the frequency domain.

As one sub-embodiment of the above-mentioned embodiment, the first time-frequency resource block occupies odd PRGs in the first RB group in the frequency domain, and the second time-frequency resource block occupies even PRGs in the first RB group in the frequency domain.

As one embodiment, the first information set comprises the first sub-information and the second sub-information.

As one embodiment, the second signaling comprises DCI, and the first sub-information comprises information in DCI field Time domain resource assignment of the second signaling.

As one embodiment, the second signaling comprises DCI, and the second sub-information comprises information in DCI field Frequency domain resource assignment of the second signaling.

As one embodiment, the second signaling comprises an RRC IE, and the first sub-information comprises information in at least one of the periodicity field, the timeDomainOffset field, or the timeDomainAllocation field of the second signaling.

As one embodiment, the second signaling comprises an RRC IE, and the second sub-information comprises information in a frequencyDomainAllocation field of the second signaling.

As one embodiment, the second signaling is used for determining a priority of the first signal and a priority of the second signal.

As one embodiment, the same field in the second signaling indicates the priority of the first signal and the priority of the second signal.

As one embodiment, the second signaling indicates a first priority index, a priority index of the first signal is the first priority index, and a priority index of the second signal is the first priority index.

As one embodiment, the second signaling is a piece of DCI, the second signaling does not comprise a DCI field Priority indicator, the priority index of the first signal is equal to 0, and the priority index of the second signal is equal to 0.

As one embodiment, the second signaling is a ConfiguredGrantConfig IE, the second signaling does not comprise a phy-PriorityIndex field, the priority index of the first signal is equal to 0, and the priority index of the second signal is equal to 0.

As one embodiment, the second signaling indicates the first reference signal resource group and the second reference signal resource group.

As one embodiment, a DCI field SRS resource indicator of the second signaling indicates the first reference signal resource group, and a DCI field second SRS resource indicator of the second signaling indicates the second reference signal resource group.

As one embodiment, the DCI field SRS resource indicator of the second signaling indicates the second reference signal resource group, and the DCI field second SRS resource indicator of the second signaling indicates the first reference signal resource group.

**Embodiment 7**

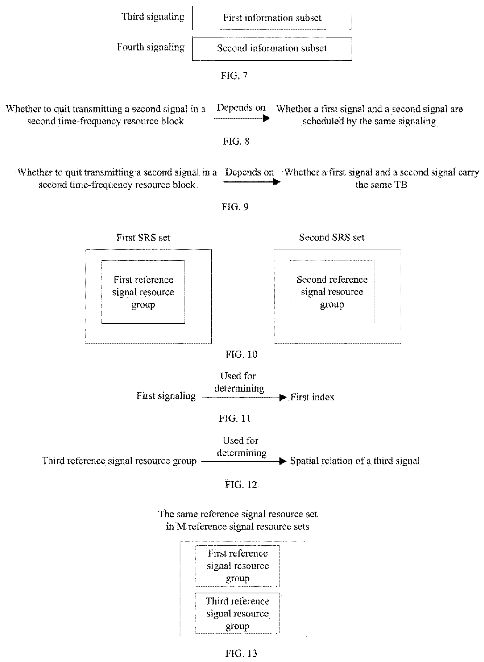

Embodiment 7 illustrates a schematic diagram of a first information set according to one embodiment of the present application, as shown in FIG. 7. In Embodiment 7, the first information set is carried by two signalings, namely, a third signaling and a fourth signaling; the first information set comprises a first information subset and a second information subset, the first information subset is carried by the third signaling, and the second information subset is carried by the fourth signaling.

As one embodiment, the first information set is carried by a third signaling and a fourth signaling; the first information set comprises a first information subset and a second information subset, the first information subset is carried by the third signaling, and the second information subset is carried by the fourth signaling.

As one embodiment, the first information subset is used for determining the first time-frequency resource block, and the second information subset is used for determining the second time-frequency resource block.

As one embodiment, the first information subset indicates the first time-frequency resource block, and the second information subset indicates the second time-frequency resource block.

As one embodiment, the first information subset comprises all information in the third signaling.

As one embodiment, the first information subset comprises information in one or more fields in the third signaling.

As one embodiment, the second information subset comprises all information in the fourth signaling.

As one embodiment, the second information subset comprises information in one or more fields in the fourth signaling.

As one embodiment, the third signaling comprises scheduling information of the first signal, and the fourth signaling comprises scheduling information of the second signal.

As one embodiment, the first signal comprises PUSCH transmission scheduled by the third signaling, and the second signal comprises PUSCH transmission scheduled by the fourth signaling.

As one embodiment, the third signaling comprises DCI, and the fourth signaling comprises DCI.

As one embodiment, the third signaling and the fourth signaling respectively comprise two pieces of different DCI.

As one embodiment, the third signaling and the fourth signaling are respectively two pieces of different DCI.

As one embodiment, the first information subset comprises information in at least one of DCI field Time domain resource assignment and DCI field Frequency domain resource assignment of the third signaling, and the second information subset comprises information in at least one of DCI field Time domain resource assignment and DCI field Frequency domain resource assignment of the fourth signaling.

As one embodiment, the first information subset comprises information in at least one of a DCI field Modulation and coding scheme, a DCI field New data indicator or a DCI field HARQ process number of the third signaling; the second information subset comprises information in at least one of the DCI field Modulation and coding scheme, the DCI field New data indicator or the DCI field HARQ process number of the fourth signaling.

As one embodiment, the third signaling is transmitted in a first CORESET, the fourth signaling is transmitted in a second CORESET, and the first CORESET and the second CORESET correspond to different CORESET pool indexes (coresetPoolIndex).

As one sub-embodiment of the above-mentioned embodiment, the first CORESET is configured with a CORESET pool index equal to 0 or is not configured with a CORESET pool index, and the second CORESET is configured with a CORESET pool index equal to 1.

As one sub-embodiment of the above-mentioned embodiment, the first CORESET is configured with a CORESET pool index equal to 1, and the second CORESET is configured with a CORESET pool index equal to 0 or is not configured with a CORESET pool index.

As one embodiment, the third signaling and the fourth signaling are respectively used for scheduling at least one PUSCH.

As one embodiment, the third signaling and the fourth signaling are respectively used for activating PUSCH transmission based on a configured grant.

As one embodiment, a CRC of the third signaling is scrambled by a C-RNT.

As one embodiment, the CRC of the third signaling is scrambled by an MCS-C-RNTI.

As one embodiment, the CRC of the third signaling is scrambled by a CS-RNTI.

As one embodiment, the CRC of the fourth signaling is scrambled by a C-RNT.

As one embodiment, the CRC of the fourth signaling is scrambled by an MCS-C-RNTI.

As one embodiment, the CRC of the fourth signaling is scrambled by a CS-RNTI.

As one embodiment, the third signaling comprises an RRC IE, and the fourth signaling comprises an RRC IE.

As one embodiment, the third signaling and the fourth signaling respectively comprise two different RRC IEs.

As one embodiment, the third signaling and the fourth signaling are respectively two different RRC IEs.

As one embodiment, the third signaling and the fourth signaling are respectively two ConfiguredGrant-Config IEs.

As one embodiment, the third signaling and the fourth signaling are respectively used for configuring PUSCH transmission based on a configured grant.

As one embodiment, the third signaling and the fourth signaling are respectively used for configuring uplink transmission without a dynamic grant.

As one embodiment, a ConfiguredGrantConfigIndex indicated by the third signaling is not equal to the ConfiguredGrantConfigIndex indicated by the fourth signaling.

As one embodiment, a ConfiguredGrantConfigIndexMAC indicated by the third signaling is not equal to the ConfiguredGrantConfigIndexMAC indicated by the fourth signaling.

As one embodiment, the first information subset comprises third sub-information and fourth sub-information, the third sub-information indicates time domain resources occupied by the first time-frequency resource block, and the fourth sub-information indicates frequency domain resources occupied by the first time-frequency resource block.

As one sub-embodiment of the above-mentioned embodiment, the third sub-information comprises information in DCI field Time domain resource assignment of the third signaling, and the fourth sub-information comprises information in DCI field Frequency domain resource assignment of the third signaling.

As one sub-embodiment of the above-mentioned embodiment, the third sub-information comprises information in at least one of a periodicity field, a timeDomainOffset field, or a timeDomainAllocation field of the third signaling; the fourth sub-information comprises information in a frequencyDomainAllocation field of the third signaling.

As one embodiment, the second information subset comprises fifth sub-information and sixth sub-information, the fifth sub-information indicates time domain resources occupied by the second time-frequency resource block, and the sixth sub-information indicates frequency domain resources occupied by the second time-frequency resource block.

As one sub-embodiment of the above-mentioned embodiment, the fifth sub-information comprises information in DCI field Time domain resource assignment of the fourth signaling, and the sixth sub-information comprises information in DCI field Frequency domain resource assignment of the fourth signaling.

As one sub-embodiment of the above-mentioned embodiment, the fifth sub-information comprises information in at least one of the periodicity field, the timeDomainOffset field, or the timeDomainAllocation field of the fourth signaling; the sixth sub-information comprises information in the frequencyDomainAllocation field of the fourth signaling.

As one embodiment, the third signaling and the fourth signaling are transmitted in the same BWP.

As one embodiment, the third signaling and the fourth signaling are transmitted in different BWPs.

As one embodiment, the third signaling and the fourth signaling are transmitted in the same serving cell.

As one embodiment, the third signaling and the fourth signaling are transmitted in different serving cells.

As one embodiment, the third signaling and the fourth signaling are used for scheduling the same BWP.

As one embodiment, if one CORESET is configured with a CORESET pool index, a CORESET pool index corresponding to the one CORESET is a CORESET pool index configured for the one CORESET.

As one embodiment, if one CORESET is not configured with a CORESET pool index, the CORESET pool index corresponding to the one CORESET is equal to 0.

As one embodiment, the third signaling is used for determining a priority of the first signal.

As one embodiment, the third signaling indicates a priority index of the first signal.

As one embodiment, the third signaling is a piece of DCI, the third signaling does not comprise a DCI field Priority indicator, and the priority index of the first signal is equal to 0.

As one embodiment, the third signaling is a ConfiguredGrantConfig IE, the third signaling does not comprise a phy-PriorityIndex field, and the priority index of the first signal is equal to 0.

As one embodiment, the fourth signaling is used for determining the priority of the second signal.

As one embodiment, the fourth signaling indicates the priority index of the second signal.

As one embodiment, the fourth signaling is a piece of DCI, the fourth signaling does not comprise the DCI field Priority indicator, and the priority index of the second signal is equal to 0.

As one embodiment, the fourth signaling is a ConfiguredGrantConfig IE, the fourth signaling does not comprise the phy-PriorityIndex field, and the priority index of the second signal is equal to 0.

As one embodiment, the third signaling indicates the first reference signal resource group, and the fourth signaling indicates the second reference signal resource group.

As one embodiment, a DCI field SRS resource indicator of the third signaling indicates the first reference signal resource group, and the DCI field SRS resource indicator of the fourth signaling indicates the second reference signal resource group.

**Embodiment 8**

Embodiment 8 illustrates a schematic diagram of whether to quit transmitting a second signal in a second time-frequency resource block depending on whether a first signal and a second signal are scheduled by the same signaling according to one embodiment of the present application, as shown in FIG. 8.

As one embodiment, the meaning of the sentence "whether to quit transmitting the second signal in the second time-frequency resource block depends on the first information set" comprises: whether to quit transmitting the second signal in the second time-frequency resource block depends on whether the first signal and the second signal are scheduled by the same signaling; the first information set comprises scheduling information of the first signal and scheduling information of the second signal.

As one embodiment, the meaning of the sentence "whether to quit transmitting the second signal in the second time-frequency resource block depends on the first information set" comprises: whether to quit transmitting the second signal in the second time-frequency resource block depends on whether scheduling information of the first signal and scheduling information of the second signal that are comprised in the first information set are carried by the same signaling.

As one embodiment, the first signal and the second signal are scheduled by the same signaling, and the first information set only comprises information in the same signaling; or, the first signal and the second signal are respectively scheduled by two different signalings, and the first information set comprises information in each of the two different signalings.

As one embodiment, when the first signal and the second signal are respectively scheduled by two different signalings and the two different signalings are respectively DCI, the two different signalings are respectively transmitted in a first CORESET and a second CORESET, and the first CORESET and the second CORESET correspond to different CORESET pool indexes (coresetPoolIndex).

As one embodiment, the meaning of the sentence "whether the first signal and the second signal are scheduled by the same signaling" comprises: whether scheduling information of the first signal and scheduling information of the second signal are carried by the same signaling.

As one embodiment, the first signal and the second signal are scheduled by the same signaling.

As one embodiment, the first signal and the second signal are respectively scheduled by two different signalings.

As one embodiment, the same signaling comprises DCI.

As one embodiment, the same signaling is a piece of DCI.

As one embodiment, the meaning of the sentence "whether the first signal and the second signal are scheduled by the same signaling" comprises: whether the first signal and the second signal are scheduled by the same DCI.

As one embodiment, the meaning of the sentence "whether the first signal and the second signal are scheduled by the same signaling" comprises: whether scheduling information of the first signal and scheduling information of the second signal are carried by the same DCI.

As one embodiment, the meaning of the sentence "whether the first signal and the second signal are scheduled by the same signaling" comprises: whether the first signal and the second signal are PUSCH transmission based on configured grants that are activated by the same DCI.

As one embodiment, the same signaling comprises an RRC signaling.

As one embodiment, the same signaling comprises an RRC IE.

As one embodiment, the same signaling comprises a ConfiguredGrantConfig IE.

As one embodiment, the same signaling is one RRC signaling.

As one embodiment, the same signaling is one RRC IE.

As one embodiment, the same signaling is one ConfiguredGrantConfig IE.

As one embodiment, the meaning of the sentence "whether the first signal and the second signal are scheduled by the same signaling" comprises: whether scheduling information of the first signal and scheduling information of the second signal are configured by the same ConfiguredGrantConfig IE.

As one embodiment, the meaning of the sentence "whether the first signal and the second signal are scheduled by the same signaling" comprises: whether the first signal and the second signal are PUSCH transmission based on configured grants that are configured by the same ConfiguredGrantConfig IE.

As one embodiment, the meaning of the sentence "whether the first signal and the second signal are scheduled by the same signaling" comprises: whether the first signal and the second signal correspond to the same ConfiguredGrantConfigIndex.

As one embodiment, the meaning of the sentence "whether the first signal and the second signal are scheduled by the same signaling" comprises: whether the first signal and the second signal correspond to the same ConfiguredGrantConfigIndexMAC.

As one embodiment, whether the first signal and the second signal are scheduled by the same signaling is used for determining whether to quit transmitting the second signal in the second time-frequency resource block.

As one embodiment, whether the first signal and the second signal are scheduled by the same signaling is used by the first node for determining whether to quit transmitting the second signal in the second time-frequency resource block.

As one embodiment, when the first signal and the second signal are scheduled by the same signaling, the first node quits transmitting the second signal in the second time-frequency resource block.

As one embodiment, when the first signal and the second signal are respectively scheduled by two different signalings, the first node transmits the second signal in the second time-frequency resource block.

As one embodiment, the first signal and the second signal are scheduled by the same signaling, and the first node quits transmitting the second signal in the second time-frequency resource block; or, the first signal and the second signal are respectively scheduled by two different signalings, and the first node transmits the second signal in the second time-frequency resource block.

As one embodiment, when the first signal and the second signal are respectively scheduled by two different signalings and the two different signalings are respectively DCI, whether to quit transmitting the second signal in the second time-frequency resource block depends on whether the two different signalings are transmitted in CORESETs corresponding to different CORESET pool indexes.

As one embodiment, when the first signal and the second signal are respectively scheduled by two different signalings, the two different signalings are respectively DCI and the two different signalings are respectively transmitted in CORESETs corresponding to different CORESET pool indexes, the first node transmits the second signal in the second time-frequency resource block.

As one embodiment, when the first signal and the second signal are respectively scheduled by two different signalings, the two different signalings are respectively DCI and CORESETs to which the two different signalings belong correspond to the same CORESET pool index, the first node quits transmitting the second signal in the second time-frequency resource block.

As one embodiment, the first signal and the second signal are respectively scheduled by two different signalings, the two different signalings are respectively DCI, the CORESETs to which the two different signalings belong correspond to different CORESET pool indexes, and the first node transmits the second signal in the second time-frequency resource block; or, the first signal and the second signal are scheduled by the same signaling, and the first node quits transmitting the second signal in the second time-frequency resource block.

As one embodiment, the first signal and the second signal are respectively scheduled by two different signalings, the two different signalings are respectively DCI, the CORESETs to which the two different signalings belong correspond to different CORESET pool indexes, and the first node transmits the second signal in the second time-frequency resource block; or, the first signal and the second signal are respectively scheduled by two different signalings, the two different signalings are respectively DCI, the CORESETs to which the two different signalings belong correspond to the same CORESET pool index, and the first node quits transmitting the second signal in the second time-frequency resource block.

As one embodiment, when the first signal and the second signal are respectively scheduled by two different signalings, whether to quit transmitting the second signal in the second time-frequency resource block depends on whether TCI states of the two different signalings are associated with different cell indexes.

As one embodiment, the first signal and the second signal are respectively scheduled by two different signalings, the TCI states of the two different signalings are associated with different cell indexes, and the first node transmits the second signal in the second time-frequency resource block; or, the first signal and the second signal are respectively scheduled by two different signalings, the TCI states of the two different signalings are associated with the same cell index, and the first node quits transmitting the second signal in the second time-frequency resource block.

As one embodiment, whether the second node quits receiving the second signal in the second time-frequency resource block depends on whether the first signal and the second signal are scheduled by the same signaling.

As one embodiment, the first signal and the second signal are scheduled by the same signaling, and the second node quits receiving the second signal in the second time-frequency resource block; or, the first signal and the second signal are respectively scheduled by two different signalings, and the second node receives the second signal in the second time-frequency resource block.

As one embodiment, when the first signal and the second signal are respectively scheduled by two different signalings and the two different signalings are respectively DCI, whether the second node quits receiving the second signal in the second time-frequency resource block depends on whether the two different signalings are transmitted in CORESETs corresponding to different CORESET pool indexes.

As one embodiment, the first signal and the second signal are respectively scheduled by two different signalings, the two different signalings are respectively DCI, the CORESETs to which the two different signalings belong correspond to different CORESET pool indexes, and the second node receives the second signal in the second time-frequency resource block; or, the first signal and the second signal are scheduled by the same signaling, and the second node quits receiving the second signal in the second time-frequency resource block.

## Embodiment 9

Embodiment 9 illustrates a schematic diagram of whether to quit transmitting a second signal in a second time-frequency resource block depending on whether a first signal and a second signal carry the same TB according to one embodiment of the present application, as shown in FIG. 9.

As one embodiment, the TB refers to a transport block.

As one embodiment, the meaning of the sentence "whether to quit transmitting the second signal in the second time-frequency resource block depends on the first information set" comprises: whether to quit transmitting the second signal in the second time-frequency resource block depends on whether the first signal and the second signal carry the same TB, and the first information set is used for determining whether the first signal and the second signal carry the same TB.

As one embodiment, the meaning of the sentence "whether the first signal and the second signal carry the same TB" comprises: whether the first signal and the second signal carry the same codeword.

As one embodiment, the meaning of the sentence "whether the first signal and the second signal carry the same TB" comprises: whether a MCS of the first signal and a MCS of the second signal are indicated by the same field.

As one sub-embodiment of the above-mentioned embodiment, the same field is one DCI field.

As one sub-embodiment of the above-mentioned embodiment, the same field is a field in one RRC IE.

As one sub-embodiment of the above-mentioned embodiment, the same field is one field in the second signaling.

As one embodiment, the first signal and the second signal carry the same TB, and the same TB is mapped to one codeword; or, the first signal and the second signal respectively carry different TBs, and the different TBs are respectively mapped to different codewords.

As one embodiment, the first signal and the second signal carry the same TB.

As one embodiment, the first signal and the second signal respectively carry different TBs.

As one embodiment, whether the first signal and the second signal carry the same TB is used for determining whether to quit transmitting the second signal in the second time-frequency resource block.

As one embodiment, whether the first signal and the second signal carry the same TB is used by the first node for determining whether to quit transmitting the second signal in the second time-frequency resource block.

As one embodiment, when the first signal and the second signal carry the same TB, the first node quits transmitting the second signal in the second time-frequency resource block.

As one embodiment, when the first signal and the second signal respectively carry different TBs, the first node transmits the second signal in the second time-frequency resource block.

As one embodiment, the first signal and the second signal carry the same TB, and the first node quits transmitting the second signal in the second time-frequency resource block; or, the first signal and the second signal respectively carry different TBs, and the first node transmits the second signal in the second time-frequency resource block.

As one embodiment, whether to quit transmitting the second signal in the second time-frequency resource block depends on whether the first signal and the second signal are scheduled by the same signaling, and depends on whether the first signal and the second signal carry the same TB.

As one embodiment, when the first signal and the second signal are scheduled by the same signaling and the first signal and the second signal carry the same TB, the first node quits transmitting the second signal in the second time-frequency resource block.

As one embodiment, when the first signal and the second signal are scheduled by the same signaling and the first signal and the second signal respectively carry different TBs, the first node transmits the second signal in the second time-frequency resource block.

As one embodiment, the first signal and the second signal are scheduled by the same signaling, the first signal and the second signal carry the same TB, and the first node quits transmitting the second signal in the second time-frequency resource block; or, the first signal and the second signal are scheduled by the same signaling, the first signal and the second signal respectively carry different TBs, and the first node transmits the second signal in the second time-frequency resource block.

As one embodiment, the first signal and the second signal are scheduled by the same signaling, the first signal and the second signal carry the same TB, and the first node quits transmitting the second signal in the second time-frequency resource block; or, the first signal and the second signal are scheduled by the same signaling, the first signal and the second signal respectively carry different TBs, and the first node transmits the second signal in the second time-frequency resource block; or, the first signal and the second signal are respectively scheduled by different signalings, and the first node transmits the second signal in the second time-frequency resource block.

As one embodiment, the first information set is used for determining whether the first signal and the second signal carry the same TB.

As one embodiment, the first information set indicates whether the first signal and the second signal carry the same TB.

As one embodiment, for the first node, two-codeword transmission is enabled.

As one embodiment, the first node is configured with a second higher-layer parameter, and the second higher-layer parameter indicates that two-codeword transmission is enabled.

As one sub-embodiment of the above-mentioned embodiment, a name of the second higher-layer parameter comprises "maxNrofCodewords".

As one sub-embodiment of the above-mentioned embodiment, the name of the second higher-layer parameter comprises "maxNrofCodeWordsScheduled-ByDCI".

As one sub-embodiment of the above-mentioned embodiment, a PUSCH-Config IE comprises the second higher-layer parameter.

As one sub-embodiment of the above-mentioned embodiment, a BWP-UplinkDedicated IE comprises the second higher-layer parameter.

As one sub-embodiment of the above-mentioned embodiment, a ServingCellConfig IE comprises the second higher-layer parameter.

As one embodiment, the first information set indicates whether the first signal and the second signal carry the same TB by indicating whether TB 1 and TB 2 are both enabled.

As one embodiment, DCI is used for determining whether the first signal and the second signal carry the same TB.

As one embodiment, the second signaling is used for determining whether the first signal and the second signal carry the same TB.

As one embodiment, the second signaling explicitly indicates whether the first signal and the second signal carry the same TB.

As one embodiment, the second signaling implicitly indicates whether the first signal and the second signal carry the same TB.

As one embodiment, the second signaling indicates whether both TBs are enabled.

As one embodiment, the second signaling indicates whether the first signal and the second signal carry the same TB by indicating whether both TBs are enabled.

As one embodiment, the second signaling indicates whether TB 1 is enabled, and the second signaling indicates whether TB 2 is enabled.

As one embodiment, when only one TB of TB 1 and TB 2 is enabled, the first signal and the second signal carry the same TB.

As one embodiment, when both TB 1 and TB 2 are enabled, the first signal and the second signal respectively carry different TBs.

As one sub-embodiment of the above-mentioned embodiment, the first signal carries TB 1, and the second signal carries TB 2.

As one sub-embodiment of the above-mentioned embodiment, the first signal carries TB 2, and the second signal carries TB 1.

As one embodiment, only one TB of TB 1 and TB 2 is enabled, and the first signal and the second signal carry the same TB; or, both TB 1 and TB 2 are enabled, and the first signal and the second signal respectively carry different TBs.

As one embodiment, when only one TB of TB 1 and TB 2 is enabled, the one TB is mapped to codeword 0; when both TB 1 and TB 2 are enabled, TB 1 and TB 2 are respectively mapped to codeword 0 and codeword 1.

As one embodiment, when only one TB of TB 1 and TB 2 is enabled, codeword 0 is enabled and codeword 1 is disabled; when both TB 1 and TB 2 are enabled, codeword 0 and codeword 1 are both enabled.

As one embodiment, when a DCI field Modulation and coding scheme for TB 1 of the second signaling indicates $I_{MCS} = 26$ and a DCI field Redundancy version for TB 1 of the second signaling indicates $rv_{id} = 1$, TB 1 is disabled; when the DCI field Modulation and coding scheme for TB 2 of the second signaling indicates $I_{MCS} = 26$ and the DCI field Redundancy version for TB 2 of the second signaling indicates $rv_{id} = 1$, TB 2 is disabled.

As one embodiment, the first information set indicates whether the first signal and the second signal carry the same TB by indicating the number of layers.

As one embodiment, the second signaling indicates whether the first signal and the second signal carry the same TB by indicating the number of layers.

As one sub-embodiment of the above-mentioned embodiment, the first information set comprises the number of layers indicated by the second signaling.

As one embodiment, the number of layers refers to the number of MIMO layers.

As one embodiment, the number of layers refers to a transmission rank.

As one embodiment, when the number of layers indicated by the second signaling is not greater than a first layer number threshold, the first signal and the second signal carry the same TB; when the number of layers indicated by the second signaling is greater than the first layer number threshold, the first signal and the second signal respectively carry different TBs; the first layer number threshold is a positive integer greater than 1.

As one embodiment, the first layer number threshold is equal to 4.

As one embodiment, the first layer number threshold is equal to 2.

As one embodiment, the first layer number threshold is fixed.

As one embodiment, the first layer number threshold is configurable.

As one embodiment, a DCI field SRS resource indicator of the second signaling indicates the number of layers.

As one embodiment, DCI field Precoding information and number of layers of the second signaling indicates the number of layers.

As one embodiment, the second signaling indicates whether the first signal and the second signal carry the same TB by indicating whether the DCI field Second SRS resource indicator and a DCI field Second Precoding information field are reserved or associated with one SRS resource set.

As one sub-embodiment of the above-mentioned embodiment, the first information set comprises information in the second signaling for indicating whether the DCI field Second SRS resource indicator and the Second Precoding information field are reserved or associated with one SRS resource set.

As one embodiment, when the second signaling indicates that the DCI field Second SRS resource indicator and the DCI field Second Precoding information field are reserved, the first signal and the second signal carry the same TB; when the second signaling indicates that the DCI field Second SRS resource indicator and the DCI field Second Precoding information field are associated with one SRS resource set, the first signal and the second signal respectively carry different TBs.

As one embodiment, a third higher-layer parameter is used for determining whether the first signal and the second signal carry the same TB.

As one embodiment, the third higher-layer parameter is used for indicating whether the first signal and the second signal carry the same TB.

As one embodiment, a name of the third higher-layer parameter comprises "maxNrofCodeWords".

As one embodiment, the name of the third higher-layer parameter comprises "maxNrofCodeWordsScheduledByDCI".

As one embodiment, a PUSCH-Config IE comprises the third higher-layer parameter.

As one embodiment, a BWP-UplinkDedicated IE comprises the third higher-layer parameter.

As one embodiment, a ServingCellConfig IE comprises the third higher-layer parameter.

As one embodiment, when the first node is configured with the third higher-layer parameter set to a first given parameter value, the first signal and the second signal respectively carry different TBs.

As one embodiment, when the first node is not configured with the third higher-layer parameter or a value of the configured third higher-layer parameter is not equal to the first given parameter value, the first signal and the second signal carry the same TB.

As one embodiment, the first given parameter value is equal to 2.

As one embodiment, the first given parameter value is equal to n2.

As one embodiment, whether the second node quits receiving the second signal in the second time-frequency resource block depends on whether the first signal and the second signal carry the same TB.

As one embodiment, the first signal and the second signal carry the same TB, and the second node quits receiving the second signal in the second time-frequency resource block; or, the first signal and the second signal respectively carry different TBs, and the second node receives the second signal in the second time-frequency resource block.

As one embodiment, whether the second node quits receiving the second signal in the second time-frequency resource block depends on whether the first signal and the second signal are scheduled by the same signaling, and depends on whether the first signal and the second signal carry the same TB.

As one embodiment, the first signal and the second signal are scheduled by the same signaling, the first signal and the second signal carry the same TB, and the second node quits receiving the second signal in the second time-frequency resource block; or, the first signal and the second signal are scheduled by the same signaling, the first signal and the second signal respectively carry different TBs, and the second node receives the second signal in the second time-frequency resource block.

As one embodiment, the first signal and the second signal are scheduled by the same signaling, the first signal and the second signal carry the same TB, and the second node quits receiving the second signal in the second time-frequency resource block; or, the first signal and the second signal are scheduled by the same signaling, the first signal and the second signal respectively carry different TBs, and the second node receives the second signal in the second time-frequency resource block; or, the first signal and the second signal are respectively scheduled by different signalings, and the second node receives the second signal in the second time-frequency resource block.

**Embodiment 10**

Embodiment 10 illustrates a schematic diagram of a first reference signal resource group and a second reference signal resource group according to one embodiment of the present application, as shown in FIG. 10. In Embodiment 10, any reference signal resource in the first reference signal resource group is one SRS resource in a first SRS resource set, and any reference signal resource in the second reference signal resource group is one SRS resource in a second SRS resource set.

As one embodiment, the first SRS resource set and the second SRS resource set are respectively identified by an SRS-ResourceSetId.

As one embodiment, the first SRS resource set and the second SRS resource set are respectively identified by different SRS-ResourceSetIds.

As one embodiment, a higher-layer parameter "usage" associated with the first SRS resource set and the higher-layer parameter "usage" associated with the second SRS resource set are both set to "codebook" or both set to "nonCodebook", and a first higher-layer parameter is used for configuring the first SRS resource set and the second SRS resource set; a name of the first higher-layer parameter comprises "srs-ResourceSet".

As one embodiment, the name of the first higher-layer parameter comprises "srs-ResourceSetToAddModList".

As one embodiment, the first higher-layer parameter is the higher-layer parameter "srs-ResourceSetToAddModList".

As one embodiment, the first SRS resource set and the second SRS resource set correspond to different power control adjustment state indexes.

As one embodiment, any SRS resource in the first SRS resource set and any SRS resource in the second SRS resource set correspond to different power control adjustment state indexes.

As one embodiment, the power control adjustment state index refers to a closed loop index (closedLoopIndex).

## Embodiment 11

Embodiment 11 illustrates a schematic diagram of a first signaling being used for determining a first index according to one embodiment of the present application, as shown in FIG. 11.

As one embodiment, the first signaling is used by the first node for determining the first index.

As one embodiment, the first index is used by the first node for determining to quit transmitting the first signal in the first time-frequency resource block.

As one embodiment, the first index is used by the first node for determining to quit transmitting the first signal in the first signal and the second signal.

As one embodiment, the first index is used by the first node for determining to quit transmitting only the first signal in the first signal and the second signal.

As one embodiment, the first signaling indicates the first index.

As one embodiment, a CORESET to which the first signaling belongs is used for determining the first index.

As one embodiment, a search space set to which the first signaling belongs is used for determining the first index.

As one embodiment, a TCI state of the first signaling is used for determining the first index.

As one embodiment, the first signaling indicates one TCI state, and the first index is an identifier of a reference signal resource indicated by the one TCI state.

As one embodiment, the first signaling indicates one reference signal resource, and the first index is an identifier of the one reference signal resource.

As one embodiment, the first signaling indicates one reference signal resource set, and the first index is an identifier of the one reference signal resource set.

As one embodiment, the first signaling indicates one SRS resource set, and the first index is an SRS-ResourceSetId of the one SRS resource set.

As one embodiment, the first signaling indicates one SRS resource, and the first index is the SRS-ResourceSetId of the SRS resource set to which the one SRS resource belongs.

As one embodiment, the first signaling is used for determining one SRS resource, and the first index is an SRS-ResourceId of the one SRS resource.

As one embodiment, the first signaling is used for determining one SRS resource set, and the first index is the SRS-ResourceSetId of the one SRS resource set.

As one embodiment, the first index is a non-negative integer.

As one embodiment, the first index is a non-negative real number.

As one embodiment, the first index is one CORESET pool index.

As one embodiment, the first index is used for identifying one CORESET pool.

As one embodiment, the first index is a CORESET pool index (coresetPoolIndex) corresponding to a CORESET to which the first signaling belongs.

As one embodiment, the first signaling is used for determining one TCI state, the one TCI state belongs to a given TCI state group, and the first index is equal to the CORESET pool index corresponding to the given TCI state group.

As one sub-embodiment of the above-mentioned embodiment, the first signaling indicates the one TCI state.

As one sub-embodiment of the above-mentioned embodiment, the first signaling indicates one reference signal resource, and the reference signal resource indicated by the one TCI state comprises the one reference signal resource.

As one embodiment, the meaning of the sentence "the first signal is associated with the first index" comprises: the CORESET pool index corresponding to the CORESET to which scheduling DCI of the first signal belongs is equal to the first index.

As one embodiment, the meaning of the sentence "the first signal is associated with the first index" comprises: at least one TCI state in the given TCI state group is used for determining a spatial relation of reference signal resources in the first reference signal resource group, and the CORESET pool index corresponding to the given TCI state group is equal to the first index.

As one embodiment, the meaning of "the CORESET pool index corresponding to one TCI state group" comprises an index of a given CORESET pool, the one TCI state group is activated specifically for the given CORESET pool.

As one embodiment, the meaning of "the CORESET pool index corresponding to one TCI state group" comprises the index of the given CORESET pool, and a mapping relation between the one TCI state group and a DCI field Transmission Configuration Indication code point is specific to the given CORESET pool.

As one embodiment, the meaning of "the CORESET pool index corresponding to one TCI state group" comprises a CORESET pool index indicated by a given MAC CE, and the given MAC CE is used for activating the one TCI state group.

As one embodiment, the first index is one SRS-ResourceSetId.

As one embodiment, the first index is one SRS-ResourceId.

As one embodiment, the first index is used for identifying one SRS resource.

As one embodiment, the first index is used for identifying one SRS resource set.

As one embodiment, the meaning of the sentence "the first signal is associated with the first index" comprises: the SRS-ResourceSetId of the SRS resource set to which the first reference signal resource group belongs is equal to the first index.

As one embodiment, the meaning of the sentence "the first signal is associated with the first index" comprises: an identifier of one reference signal resource in the first reference signal resource group is equal to the first index.

As one embodiment, the first index is one TCI-StateId.

As one embodiment, the first index is used for identifying one TCI state.

As one embodiment, the first index is a TCI-StateId corresponding to a TCI state of the first signaling.

As one embodiment, the first index is a TCI-StateId of a TCI state of a CORESET to which the first signaling belongs.

As one embodiment, the meaning of the sentence "the first signal is associated with the first index" comprises: a first TCI state is used for determining a spatial relation of reference signal resources in the first reference signal resource group, and a TCI-StateId of the first TCI state is equal to the first index.

As one embodiment, the meaning of the sentence "the first signal is associated with the first index" comprises: a TCI state of reference signal resources in the first reference signal resource group is a first TCI state, and a TCI-StateId of the first TCI state is equal to the first index.

As one embodiment, the meaning of the sentence "the first signal is associated with the first index" comprises: a given reference signal resource is used for determining the spatial relation of reference signal resources in the first reference signal resource group, the first TCI state indicates the given reference signal resource, and the TCI-StateId of the first TCI state is equal to the first index.

As one embodiment, the given reference signal resource is used for determining the spatial relation of a second reference signal resource, and the second reference signal resource is used for determining the spatial relation of reference signal resources in the first reference signal resource group.

As one embodiment, the meaning of the sentence "the first signal is associated with the first index" comprises: a first TCI state indicates at least one reference signal resource in the first reference signal resource group, and a TCI-StateId of the first TCI state is equal to the first index.

As one embodiment, the first index is one SpatialRelationInfoId.

As one embodiment, the meaning of the sentence "the first signal is associated with the first index" comprises: an index of spatial relation information (SpatialRelationInfo) of the first signal is equal to the first index.

As one embodiment, the first index is one reference signal resource identifier.

As one embodiment, the first index is used for identifying one reference signal resource.

As one embodiment, the first index is used for identifying a group of reference signal resources.

As one embodiment, the first index is used for identifying one reference signal resource set.

As one embodiment, the first index is used for identifying one beam failure detection-RS set (BFD-RS set).

As one embodiment, the first index is used for identifying one candidate RS list.

As one embodiment, the first index is used for identifying one candidate beam RS list.

As one embodiment, the first index is an identifier of a reference signal resource indicated by a TCI state of the first signaling.

As one embodiment, the first index is an identifier of a reference signal resource indicated by the TCI state of a CORESET to which the first signaling belongs.

As one embodiment, the reference signal resource identifier is an SSB-Index, an NZP-CSI-RS-ResourceId or an SRS-ResourceId.

As one embodiment, the meaning of the sentence "the first signal is associated with the first index" comprises: a given reference signal resource is used for determining a spatial relation of reference signal resources in the first reference signal resource group, and an identifier of the given reference signal resource is the first index.

As one embodiment, the meaning of the sentence "the first signal is associated with the first index" comprises: the first reference signal resource group belongs to a group of reference signal resources, or one reference signal resource in a group of reference signal resources is used for determining the spatial relation of reference signal resources in the first reference signal resource group; the first index is used for identifying the group of reference signal resources.

As one sub-embodiment of the above-mentioned embodiment, the group of reference signal resources comprises one CSI-RS resource set.

As one sub-embodiment of the above-mentioned embodiment, the group of reference signal resources comprises one SRS resource set.

As one sub-embodiment of the above-mentioned embodiment, the group of reference signal resources comprises one BFD-RS set.

As one sub-embodiment of the above-mentioned embodiment, the group of reference signal resources comprises one candidate beam RS list.

As one embodiment, the first index is one capability index or one capability set index.

As one embodiment, the first index is used for identifying one UE capability value or one UE capability value set.

As one embodiment, the meaning of the sentence "the first signal is associated with the first index" comprises: the capability index or the capability set index corresponding to the first reference signal resource group is equal to the first index.

As one embodiment, the capability index or the capability set index is an index of the UE capability value.

As one embodiment, the one capability index or capability set index indicates a maximum number of supported SRS ports.

As one embodiment, two different capability indexes or capability set indexes indicate different maximum numbers of supported SRS ports.

As one embodiment, the first index is one power control adjustment state index.

As one embodiment, the meaning of the sentence "the first signal is associated with the first index" comprises: the power control adjustment state index corresponding to the first reference signal resource group is equal to the first index.

As one embodiment, the first index is one cell index.

As one embodiment, the meaning of the sentence "the first signal is associated with the first index" comprises: a cell index associated with the first reference signal resource group is equal to the first index.

As one embodiment, the cell index comprises a ServCellIndex.

As one embodiment, the cell index comprises an SCellIndex.

As one embodiment, the cell index comprises a PhysCellId.

As one embodiment, the cell index comprises a physical cell identity (PCI).

As one embodiment, the meaning of a cell index associated with one reference signal resource group comprises a cell index associated with a TCI state of a reference signal in the one reference signal resource group.

As one embodiment, the meaning of the cell index associated with one TCI state comprises an additionalPCI or a ServCellIndex indicated by a TCI-State IE that configures the one TCI state.

As one embodiment, the meaning of the cell index associated with one reference signal resource group comprises the cell index associated with a first SS/PBCH block, and the first SS/PBCH block is used for determining a spatial relation of reference signals in the one reference signal resource group.

As one embodiment, the meaning of a cell index associated with one SS/PBCH block comprises a cell index used for determining an SS sequence of the one SS/PBCH block.

As one embodiment, the meaning of the cell index associated with one SS/PBCH block comprises an index of a cell in which the one SS/PBCH block is transmitted.

As one embodiment, the first index is used for identifying one PUCCH resource.

As one embodiment, the first index is one PUCCH-ResourceId.

As one embodiment, the first index is used for identifying one PUCCH resource set.

As one embodiment, the first index is one PUCCH-ResourceSetId.

As one embodiment, the first index is used for identifying one BWP.

As one embodiment, the first index is used for identifying one antenna group.

As one embodiment, the first index is used for identifying one transmitter receiver point (TRP).

As one embodiment, the first index is used for identifying one panel (antenna panel).

As one embodiment, the second signal is associated with a second index, and the second index is not equal to the first index.

As one embodiment, the meaning of the sentence "the second signal is associated with a second index" is the same as the meaning of the sentence "the first signal is associated with the first index", except that the first signal is replaced by the second signal and the first index is replaced by the second index.

## Embodiment 12

Embodiment 12 illustrates a schematic diagram of a third reference signal resource group being used for determining a spatial relation of a third signal according to one embodiment of the present application, as shown in FIG. 12.

As one embodiment, the first signaling is used for determining the third reference signal resource group.

As one embodiment, the first signaling indicates the third reference signal resource group.

As one embodiment, another signaling different from the first signaling indicates the third reference signal resource group.

As one sub-embodiment of the above-mentioned embodiment, the another signaling comprises DCI.

As one sub-embodiment of the above-mentioned embodiment, the another signaling is used for indicating at least one TCI state.

As one sub-embodiment of the above-mentioned embodiment, the another signaling comprises a MAC CE.

As one sub-embodiment of the above-mentioned embodiment, the first signaling comprises a higher-layer signaling, and the another signaling comprises DCI.

As one sub-embodiment of the above-mentioned embodiment, the first signaling comprises DCI, and the another signaling comprises a higher-layer signaling.

As one embodiment, the spatial relation comprises a TCI state.

As one embodiment, the spatial relation comprises a QCL parameter.

As one embodiment, the spatial relation comprises a QCL relation.

As one embodiment, the spatial relation comprises a QCL assumption.

As one embodiment, the spatial relation comprises a spatial domain filter.

As one embodiment, the spatial relation comprises a transmitting antenna port.

As one embodiment, the spatial relation comprises a precoder.

As one embodiment, any reference signal resource in the third reference signal resource group is one SRS resource, and the third signal is transmitted by the same antenna port as an SRS port of an SRS resource in the third reference signal resource group.

As one embodiment, the first node uses the same spatial domain filter to transmit the third signal and transmits or receives a reference signal in the third reference signal resource group.

As one embodiment, the third reference signal resource group only comprises one reference signal resource.

As one embodiment, the third reference signal resource group comprises multiple reference signal resources.

As one embodiment, the third reference signal resource group comprises an SRS resource.

As one embodiment, any reference signal resource in the third reference signal resource group is one SRS resource.

As one embodiment, the third reference signal resource group consists of one SRS resource.

As one embodiment, the third reference signal resource group comprises a CSI-RS resource.

As one embodiment, the third reference signal resource group consists of one CSI-RS resource.

As one embodiment, the third reference signal resource group comprises an SS/PBCH block resource.

As one embodiment, the third reference signal resource group consists of one SS/PBCH block resource.

As one embodiment, any reference signal resource in the third reference signal resource group is a CSI-RS resource or an SS/PBCH block resource.

As one embodiment, the third reference signal resource group comprises only one reference signal resource, and the first index is an identifier of the one reference signal resource in the third reference signal resource group.

As one embodiment, the first index is an identifier of a CSI-RS resource set or an SRS resource set to which the third reference signal resource group belongs.

As one embodiment, the first index is a TCI-StateId of a TCI state of a reference signal resource in the third reference signal resource group.

As one embodiment, a second TCI state indicates the third reference signal resource group, and the first index is a TCI-StateId of the second TCI state.

As one embodiment, first spatial relation information indicates the third reference signal resource group, and the first index is a SpatialRelationInfoId of the first spatial relation information.

As one embodiment, a given reference signal resource is used for determining a spatial relation of reference signal resources in the third reference signal resource group, and the first index is an identifier of the given reference signal resource.

As one embodiment, the first index is a power control adjustment state index corresponding to the third reference signal resource group.

As one embodiment, the first index is a capability index or a capability set index corresponding to the third reference signal resource group.

As one embodiment, the first index is a cell index associated with a reference signal in the third reference signal resource group.

**Embodiment 13**

Embodiment 13 illustrates a schematic diagram of a third reference signal resource group and a first reference signal resource group belonging to the same reference signal resource set in M reference signal resource sets according to one embodiment of the present application, as shown in FIG. 13. In Embodiment 13, the third reference signal resource group and the first reference signal resource group belong to the same reference signal resource set in M reference signal resource sets; the M reference signal resource sets respectively comprise at least one reference signal resource, M being a positive integer greater than 1.

As one embodiment, the first reference signal resource group and the second reference signal resource group belong to different reference signal resource sets in the M reference signal resource sets.

As one embodiment, the third reference signal resource group and the second reference signal resource group belong to different reference signal resource sets in the M reference signal resource sets.

As one embodiment, the M reference signal resource sets are respectively configurable.

As one embodiment, the M reference signal resource sets are respectively configured by higher-layer parameters.

As one embodiment, there exists one reference signal resource set in the M reference signal resource sets that comprises only one reference signal resource.

As one embodiment, there exists one reference signal resource set in the M reference signal resource sets that comprises multiple reference signal resources.

As one embodiment, there exist two reference signal resource sets in the M reference signal resource sets that comprise unequal numbers of reference signal resources.

As one embodiment, there exists one reference signal resource set in the M reference signal resource sets that comprises downlink reference signal resources.

As one embodiment, there exists one reference signal resource set in the M reference signal resource sets that comprises uplink reference signal resources.

As one embodiment, there exists one reference signal resource set in the M reference signal resource sets that comprises both downlink reference signal resources and uplink reference signal resources.

As one embodiment, there exists no reference signal resource that belongs to two reference signal resource sets in the M reference signal resource sets.

As one embodiment, any reference signal resource in the M reference signal resource sets is one of a CSI-RS resource, an SS/PBCH block resource, or an SRS resource.

As one embodiment, any reference signal resource in the M reference signal resource sets is a CSI-RS resource or an SS/PBCH block resource.

As one embodiment, any reference signal resource in the M reference signal resource sets is an SRS resource.

As one embodiment, the first reference signal resource set and the second reference signal resource set are any two reference signal resource sets in the M reference signal resource sets; any reference signal resource in the first reference signal resource set and any reference signal resource in the second reference signal resource set are not quasi co-located.

As one sub-embodiment of the above-mentioned embodiment, any reference signal resource in the first reference signal resource set and any reference signal resource in the second reference signal resource set are not quasi co-located corresponding to a QCL-TypeD.

As one embodiment, any reference signal resource in the M reference signal resource sets corresponds to one first-type index, and the M reference signal resource sets are in one-to-one correspondence with the M index values; the first-type index corresponding to all reference signal resources in any reference signal resource set in the M reference signal resource sets is equal to a corresponding index value; any two index values in the M index values are not equal.

As one embodiment, the M is equal to 2.

As one embodiment, the M is greater than 2.

As one embodiment, the first-type index is a non-negative integer.

As one embodiment, the first-type index corresponding to one reference signal resource is configurable.

As one embodiment, the first-type index corresponding to one reference signal resource is configured by a higher-layer signaling.

As one embodiment, configuration information of one reference signal resource comprises the corresponding first-type index.

As one embodiment, the first-type index corresponding to one reference signal resource is comprised in configuration information of a reference signal resource set to which the one reference signal resource belongs; the reference signal resource set comprises a CSI-RS resource set or an SRS resource set.

As one embodiment, the one first-type index is related to a reference signal resource set to which a corresponding reference signal resource belongs; the reference signal resource set comprises a CSI-RS resource set or an SRS resource set.

As one embodiment, one reference signal resource set is configured by an NZP-CSI-RS-Resource-Set IE, or by a higher-layer parameter "srs-Resource-SetToAddModList".

As one embodiment, the one first-type index is related to a spatial relation of a corresponding reference signal resource.

As one embodiment, the one first-type index is related to a cell associated with a corresponding reference signal resource.

As one embodiment, the one first-type index is related to a BWP to which a corresponding reference signal resource belongs.

As one embodiment, the one first-type index is related to a CORESET pool index (coresetPoolIndex) corresponding to a TCI state of a corresponding reference signal resource.

As one embodiment, the first-type index corresponding to one reference signal resource is equal to a TCI-StateId of a TCI state of the one reference signal resource.

As one embodiment, the first-type index corresponding to one reference signal resource is equal to a SpatialRelationInfoId of a spatial relation of the one reference signal resource.

As one embodiment, the first-type index corresponding to one reference signal resource is equal to a CORESET pool index (coresetPoolIndex) corresponding to a TCI state of the one reference signal resource.

As one embodiment, a cell associated with one reference signal resource is used for determining a value of the first-type index corresponding to the one reference signal.

As one embodiment, a BWP to which one reference signal resource belongs is used for determining the value of the first-type index corresponding to the one reference signal.

As one embodiment, the M index values are respectively M non-negative integers.

As one embodiment, the M index values are respectively M real numbers.

As one embodiment, the M index values are respectively M candidate values of the first-type index.

As one embodiment, the M index values are respectively M CORESET pool indexes.

Ass one embodiment, M TCI state groups are in one-to-one correspondence with the M reference signal resource sets, and the M TCI state groups respectively comprise at least one TCI state; the M TCI state groups are respectively TCI state groups activated for M CORESET pools; the M index values are respectively equal to the M CORESET pool indexes.

As one sub-embodiment of the above-mentioned embodiment, M MAC CEs are respectively used for activating the M TCI state groups; the M MAC CEs respectively indicate the M CORESET pool indexes.

As one sub-embodiment of the above-mentioned embodiment, a given reference signal resource set is any reference signal resource set in the M reference signal resource sets; a given TCI state group is a TCI state group in the M TCI state groups corresponding to the given reference signal resource set; for any given reference signal resource in the given reference signal resource set, at least one TCI state in the given TCI state group is used for determining a spatial relation of the given reference signal resource, or one TCI state in the given TCI state group indicates the given reference signal resource.

As one embodiment, the M reference signal resource sets are in one-to-one correspondence with M capability indexes or capability set indexes; the M capability indexes or capability set indexes are mutually different.

As one embodiment, the M reference signal resource sets are in one-to-one correspondence with M UE capability value sets; at least one UE capability value in any two UE capability value sets in the M UE capability value sets is different.

As one embodiment, the UE capability value set refers to a UE capability value set.

As one embodiment, the one UE capability value set comprises at least one UE capability value.

As one embodiment, the M UE capability value sets comprise the same type of UE capability values.

As one embodiment, the M UE capability value sets comprise the same number of UE capability values.

As one embodiment, the M UE capability value sets comprise the same type and the same number of UE capability values.

As one embodiment, there exist two UE capability value sets in the M UE capability value sets that comprise different types or different numbers of UE capability values.

As one embodiment, the one UE capability value set comprises a maximum number of supported SRS ports.

As one embodiment, maximum values of the number of supported SRS ports comprised in any two UE capability value sets in the M UE capability value sets are not equal.

As one embodiment, indexes of any two UE capability value sets in the M UE capability value sets are different.

As one embodiment, M given reference signal resource sets are in one-to-one correspondence with the M reference signal resource sets, and any given reference signal resource set in the M given reference signal resource sets comprises at least one reference signal resource; the M given reference signal resource groups are respectively configurable.

As one sub-embodiment of the above-mentioned embodiment, the M reference signal resource sets are respectively the M given reference signal resource sets.

As one sub-embodiment of the above-mentioned embodiment, a spatial relation of any reference signal resource in any reference signal resource set in the M reference signal resource sets is determined by one reference signal resource in a corresponding given reference signal resource set.

As one sub-embodiment of the above-mentioned embodiment, the M given reference signal resource sets are configured by a fourth higher-layer parameter.

As one reference embodiment of the above-mentioned sub-embodiment, a name of the fourth higher-level parameter comprises "RadioLinkMonitoring".

As one reference embodiment of the above-mentioned sub-embodiment, the name of the fourth higher-level parameter comprises "failureDetectionResources".

As one reference embodiment of the above-mentioned sub-embodiment, the name of the fourth higher-level parameter comprises "failureDetectionResourcesToAddModList".

As one reference embodiment of the above-mentioned sub-embodiment, the name of the fourth higher-level parameter comprises "BeamFailureDetection".

As one reference embodiment of the above-mentioned sub-embodiment, the name of the fourth higher-level parameter comprises "BeamFailureDetectionSet".

As one reference embodiment of the above-mentioned sub-embodiment, the name of the fourth higher-level parameter comprises "BeamFailureRecovery".

As one reference embodiment of the above-mentioned sub-embodiment, the name of the fourth higher-layer parameter comprises "BeamFailureRecoveryConfig".

As one reference embodiment of the above-mentioned sub-embodiment, the name of the fourth higher-layer parameter comprises "candidateBeamRSList".

As one sub-embodiment of the above-mentioned embodiment, the M given reference signal resource sets are respectively configured by M fifth higher-layer parameters.

As one reference embodiment of the above-mentioned sub-embodiment, names of the M fifth higher-layer parameters all comprise "failureDetectionResources".

As one reference embodiment of the above-mentioned sub-embodiment, the names of the M fifth higher-layer parameters all comprise "failureDetection-ResourcesToAddModList".

As one reference embodiment of the above-mentioned sub-embodiment, the names of the M fifth higher-layer parameters all comprise "BeamFailureDetection".

As one reference embodiment of the above-mentioned sub-embodiment, the names of the M fifth higher-layer parameters all comprise "BeamFailureDetectionSet".

As one reference embodiment of the above-mentioned sub-embodiment, the name of one fifth higher-layer parameter in the M fifth higher-layer parameters comprises "failureDetectionResources", and the name of another fifth higher-layer parameter in the M fifth higher-layer parameters comprises "BeamFailureDetection".

As one reference embodiment of the above-mentioned sub-embodiment, the name of one fifth higher-layer parameter in the M fifth higher-layer parameters comprises "failureDetectionResourcesToAddModList", and the name of another fifth higher-layer parameter in the M fifth higher-layer parameters comprises "BeamFailureDetectionSet".

As one reference embodiment of the above-mentioned sub-embodiment, the names of the M fifth higher-layer parameters all comprise "candidateBeamRSList".

As one reference embodiment of the above-mentioned sub-embodiment, the name of one fifth higher-layer parameter in the M fifth higher-layer parameters comprises "candidateBeamRSList1", and the name of another fifth higher-layer parameter in the M fifth higher-layer parameters comprises "candidateBeamRSList2".

As one sub-embodiment of the above-mentioned embodiment, the M is equal to 2, and the M given reference signal resource sets are respectively $\bar{q}_{0,0}$ and $\bar{q}_{0,1}$.

As one sub-embodiment of the above-mentioned embodiment, the M is equal to 2, and the M given reference signal resource sets are respectively $\bar{q}_{1,0}$ and $\bar{q}_{1,1}$.

As one sub-embodiment of the above-mentioned embodiment, the M is equal to 2, and the M given reference signal resource sets are respectively two SRS resource sets that are configured with the first higher-layer parameter, and associated higher-layer parameters "usage" are all set to "codebook" or all set to "nonCodebook"; the name of the first higher-layer parameter comprises "srs-ResourceSetToAddModList".

As one embodiment, the specific definitions of $\bar{q}_{0,0}$ and $\bar{q}_{0,1}$ refer to 3GPP TS38.213.

As one embodiment, the specific definitions of $\bar{q}_{1,0}$ and $\bar{q}_{1,1}$ refer to 3GPP TS38.213.

## Embodiment 14

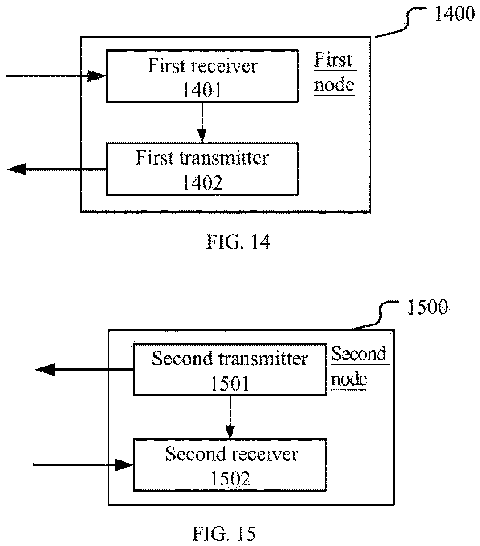

Embodiment 14 illustrates a structural block diagram of a processing apparatus used in a first node according to one embodiment of the present application, as shown in FIG. 14. In FIG. 14, a processing apparatus 1400 in the first node comprises a first receiver 1401 and a first transmitter 1402.

In Embodiment 14, the first receiver 1401 receives a first information set and a first signaling; the first transmitter 1402 quits transmitting a first signal in a first time-frequency resource block; the first transmitter 1402 transmits a second signal in a second time-frequency resource block, or quits transmitting the second signal in the second time-frequency resource block.

In embodiment 14, the first information set is used for determining the first time-frequency resource block and the second time-frequency resource block, the first time-frequency resource block being allocated to the first signal, and the second time-frequency resource block being allocated to the second signal; the first signaling is used for determining a third time-frequency resource block; the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

As one embodiment, whether to quit transmitting the second signal in the second time-frequency resource block depends on whether the first signal and the second signal are scheduled by the same signaling.

As one embodiment, whether to quit transmitting the second signal in the second time-frequency resource block depends on whether the first signal and the second signal carry the same TB.

As one embodiment, any reference signal resource in the first reference signal resource group is one SRS resource, and any reference signal resource in the second reference signal resource group is one SRS resource; the first reference signal resource group belongs to a first SRS resource set, and the second reference signal resource group belongs to a second SRS resource set; the first SRS resource set and the second SRS resource set respectively comprise at least one SRS resource.

As one embodiment, the first signaling is used for determining a first index, and the first signal is associated with the first index.

As one embodiment, the first transmitter 1401 transmits a third signal in the third time-frequency resource block.

As one embodiment, a third reference signal resource group is used for determining a spatial relation of the third signal; the third reference signal resource group comprises at least one reference signal resource.

As one embodiment, the first node is user equipment.

As one embodiment, the first node is a relay node device.

As one embodiment, the first information set is carried only by a second signaling, and the second signaling is a piece of DCI; the first information set comprises information in at least one of DCI field Time domain resource assignment, DCI field Frequency domain resource assignment, a DCI field Modulation and coding scheme, a DCI field New data indicator or a DCI field HARQ process number of the second signaling.

As one embodiment, the first information set comprises a first information subset and a second information subset, the first information subset is carried by a third signaling, the second information subset is carried by a fourth signaling, the third signaling is a piece of DCI, and the fourth signaling is a piece of DCI; the first information subset comprises information in at least one of the DCI field Time domain resource assignment, the DCI field Frequency domain resource assignment, the DCI field Modulation and coding scheme, the DCI field New data indicator or the DCI field HARQ process number of the third signaling, and the second information subset comprises information in at least one of the DCI field Time domain resource assignment, the DCI field Frequency domain resource assignment, the DCI field Modulation and coding scheme, the DCI field New data indicator or the DCI field HARQ process number of the fourth signaling; the third signaling is transmitted in a first CORESET, the fourth signaling is transmitted in a second CORESET, one of the first CORESET and the second CORESET is configured with a CORESEST pool index equal to 0 or is not configured with a CORESEST pool index, and the another of the first CORESET and the second CORESET is configured with a CORESEST pool index equal to 1.

As one embodiment, the first signal and the second signal belong to the same BWP; a priority of the third signal is higher than the priority of the first signal.

As one embodiment, the first time-frequency resource block and the second time-frequency resource block are orthogonal in a frequency domain, or the first time-frequency resource block and the second time-frequency resource block overlap in a time-frequency domain, and a DMRS port number of the first signal is different from a DMRS port number of the second signal.

As one embodiment, the first index is a CORESET pool index corresponding to a CORESET to which the first signaling belongs; the meaning of the sentence "the first signal is associated with the first index" comprises: a CORESET pool index corresponding to a CORESET to which scheduling DCI of the first signal belongs is equal to the first index.

As one embodiment, the first index is one SRS-ResourceSetId; the meaning of the sentence "the first signal is associated with the first index" comprises: an SRS-ResourceSetId of an SRS resource set to which the first reference signal resource group belongs is equal to the first index.

As one embodiment, the first receiver 1401 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1402 comprises at least one of {an antenna 452, a transmitting device 454, a transmitting processor 468, a multi-antenna transmitting processor 457, a controller/processor 459, a memory 460, and a data source 467} in Embodiment 4.

## Embodiment 15

Embodiment 15 illustrates a structural block diagram of a processing apparatus used in a second node according to one embodiment of the present application; as shown in FIG. 15. In FIG. 15, a processing apparatus 1500 in the second node comprises a second transmitter 1501 and a second receiver 1502, wherein the second receiver 1502 is optional.

In Embodiment 15, the second transmitter 1501 transmits a first information set and a first signaling.

In embodiment 15, the first information set is used for determining a first time-frequency resource block and a second time-frequency resource block, the first time-frequency resource block being allocated to a first signal, and the second time-frequency resource block being allocated to a second signal; the first signaling is used for determining a third time-frequency resource block; the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; a target receiver of the first information set quits transmitting the first signal in the first time-frequency resource block; the target receiver of the first information set transmits the second signal in the second time-frequency resource block, or the target receiver of the first information set quits transmitting the second signal in the second time-frequency resource block; whether to quit transmitting the second signal in the second time-frequency resource block depends on the first information set.

As one embodiment, the second node comprises a second receiver 1502, and the second receiver 1502 quits receiving the first signal in the first time-frequency resource block.

As one embodiment, the second node comprises a second receiver 1502, and the second receiver 1502 receives the second signal in the second time-frequency resource block, or the second receiver 1502 quits receiving the second signal in the second time-frequency resource block; whether the second receiver 1502 quits receiving the second signal in the second time-frequency resource block depends on the first information set.

As one embodiment, whether the target receiver of the first information set quits transmitting the second signal in the second time-frequency resource block depends on whether the first signal and the second signal are scheduled by the same signaling.

As one embodiment, whether the target receiver of the first information set quits transmitting the second signal in the second time-frequency resource block depends on whether the first signal and the second signal carry the same TB.

As one embodiment, any reference signal resource in the first reference signal resource group is one SRS resource, and any reference signal resource in the second reference signal resource group is one SRS resource; the first reference signal resource group belongs to a first SRS resource set, and the second reference signal resource group belongs to a second SRS resource set; the first SRS resource set and the second SRS resource set respectively comprise at least one SRS resource.

As one embodiment, the first signaling is used for determining a first index, and the first signal is associated with the first index.

As one embodiment, the second node comprises a second receiver 1502, and the second receiver 1502 receives a third signal in the third time-frequency resource block.

As one embodiment, a third reference signal resource group is used for determining a spatial relation of the third signal; the third reference signal resource group comprises at least one reference signal resource.

As one embodiment, the second node is a base station device.

As one embodiment, the second node is user equipment.

As one embodiment, the second node is a relay node device.

As one embodiment, the first information set is carried only by a second signaling, and the second signaling is a piece of DCI; the first information set comprises information in at least one of DCI field Time domain resource assignment, DCI field Frequency domain resource assignment, a DCI field Modulation and coding scheme, a DCI field New data indicator or a DCI field HARQ process number of the second signaling.

As one embodiment, the first information set comprises a first information subset and a second information subset, the first information subset is carried by a third signaling, the second information subset is carried by a fourth signaling, the third signaling is a piece of DCI, and the fourth signaling is a piece of DCI; the first information subset comprises information in at least one of the DCI field Time domain resource assignment, the DCI field Frequency domain resource assignment, the DCI field Modulation and coding scheme, the DCI field New data indicator or the DCI field HARQ process number of the third signaling, and the second information subset comprises information in at least one of the DCI field Time domain resource assignment, the DCI field Frequency domain resource assignment, the DCI field Modulation and coding scheme, the DCI field New data indicator or the DCI field HARQ process number of the fourth signaling; the third signaling is transmitted in a first CORESET, the fourth signaling is transmitted in a second CORESET, one of the first CORESET and the second CORESET is configured with a CORESEST pool index equal to 0 or is not configured with a CORESEST pool index, and the another of the first CORESET and the second CORESET is configured with a CORESEST pool index equal to 1.

As one embodiment, the first signal and the second signal belong to the same BWP; a priority of the third signal is higher than the priority of the first signal.

As one embodiment, the first time-frequency resource block and the second time-frequency resource block are orthogonal in a frequency domain, or the first time-frequency resource block and the second time-frequency resource block overlap in a time-frequency domain, and a DMRS port number of the first signal is different from a DMRS port number of the second signal.

As one embodiment, the first index is a CORESET pool index corresponding to a CORESET to which the first signaling belongs; the meaning of the sentence "the first signal is associated with the first index" comprises: a CORESET pool index corresponding to a CORESET to which scheduling DCI of the first signal belongs is equal to the first index.

As one embodiment, the first index is one SRS-ResourceSetId; the meaning of the sentence "the first signal is associated with the first index" comprises: an SRS-ResourceSetId of an SRS resource set to which the first reference signal resource group belongs is equal to the first index.

As one embodiment, the second transmitter 1501 comprises at least one of {an antenna 420, a transmitting device 418, a transmitting processor 416, a multi-antenna transmitting processor 471, a controller/-processor 475, and a memory 476} in Embodiment 4.

As one embodiment, the second receiver 1502 comprises at least one of {an antenna 420, a receiving device 418, a receiving processor 470, a multi-antenna transmitting processor 471, a controller/processor 475, and a memory 476} in Embodiment 4.

Those skilled in the art can understand that all or part of the steps in the above-mentioned method can be completed by instructing the relevant hardware through a program, and the program can be stored in a computer-readable storage medium, such as a read-only memory, a hard disk or an optical disk. Optionally, all or part of the steps in the above-mentioned embodiments can also be implemented using one or more integrated circuits. Accordingly, each module unit in the above-mentioned embodiments can be realized in the form of hardware or in the form of a software functional module. The present application is not limited to any specific form of combination of software and hardware. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, RFID terminals, NB-IOT terminals, Machine Type Communication (MTC) terminals, enhanced MTC (eMTC) terminals, data cards, Internet cards, vehicle-mounted communication devices, low-cost mobile phones, low-cost tablet computers and other wireless communication devices. The base stations or system devices in the present application include but are not limited to macrocell base stations, microcell base stations, small cell base stations, femtocells, relay base stations, eNBs, gNBs, transmitter receiver points (TRPs), GNSSs, relay satellites, satellite base stations, aerial base stations, road side units (RSUs), drones, test devices, and wireless communication devices such as transceiving apparatuses or signaling testers that simulate some functions of base stations.

Those skilled in the art should understand that the present invention can be implemented in other specified forms without departing from its core or basic features. Therefore, the embodiments disclosed at present should be regarded as illustrative rather than restrictive in any way. The scope of the invention is determined by the appended claims rather than the previous description, and all changes within the equivalent meaning and area are considered to be comprised therein.

**Claims**

1. A first node for wireless communication, comprising:

a first receiver configured to receive a first information set, wherein the first information set is used for determining a first time-frequency resource block and a second time-frequency resource block, the first time-frequency resource block being allocated to a first signal, and the second time-frequency resource block being allocated to a second signal;
the first receiver further configured to receive a first signaling, wherein the first signaling is used for determining a third time-frequency resource block;
a first transmitter configured to quit transmitting the first signal in the first time-frequency resource block;
the first transmitter further configured to transmit the second signal in the second time-frequency resource block, or quit transmitting the second signal in the second time-frequency resource block,
wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

2. The first node according to claim 1, wherein whether to quit transmitting the second signal in the second time-frequency resource block depends on whether the first signal and the second signal are scheduled by the same signaling.

3. The first node according to claim 1 or 2, wherein whether to quit transmitting the second signal in the second time-frequency resource block depends on whether the first signal and the second signal carry the same TB.

4. The first node according to any one of claims 1 to 3, wherein any reference signal resource in the first reference signal resource group is an SRS resource, and any reference signal resource in the second reference signal resource group is an SRS resource; the first reference signal resource group belongs to a first SRS resource set, and the second reference signal resource group belongs to a second SRS resource set; the first SRS resource set and the second SRS resource set respectively comprise at least one SRS resource.

5. The first node according to any one of claims 1 to 4, wherein the first signaling is used for determining a first index, and the first signal is associated with the first index.

6. The first node according to any one of claims 1 to 5, wherein the first transmitter transmits a third signal in the third time-frequency resource block.

7. The first node according to claim 6, wherein a third reference signal resource group is used for determining a spatial relationship of the third signal; the third reference signal resource group comprises at least one reference signal resource.

8. A second node for wireless communication, comprising:

a second transmitter configured to transmit a first information set, wherein the first information set is used for determining a first time-frequency resource block and a second time-frequency resource block, the first time-frequency resource block being allocated to a first signal, and the second time-frequency resource block being allocated to a second signal;
the second transmitter further configured to transmit a first signaling, wherein the first signaling is used for determining a third time-frequency resource block,
wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; a target receiver of the first information set quits transmitting the first signal in the first time-frequency resource block; the target receiver of the first information set transmits the second signal in the second time-frequency resource block, or the target receiver of the first information set quits transmitting the second signal in the second time-frequency resource block; whether to quit transmitting the second signal in the second time-frequency resource block depends on the first information set.

9. The second node according to claim 8, wherein whether the target receiver of the first information set quits transmitting the second signal in the second time-frequency resource block depends on whether the first signal and the second signal are scheduled by the same signaling.

10. The second node according to claim 8 or 9, wherein whether the target receiver of the first information set quits transmitting the second signal in the second time-frequency resource block depends on whether the first signal and the second signal carry the same TB.

11. The second node according to any one of claims 8 to 10, wherein any reference signal resource in the first reference signal resource group is an SRS resource, and any reference signal resource in the second reference signal resource group is an SRS resource; the first reference signal resource group belongs to a first SRS resource set, and the second reference signal resource group belongs to a second SRS resource set; the first SRS resource set and the second SRS resource set respectively comprise at least one SRS resource.

12. The second node according to any one of claims 8 to 11, wherein the first signaling is used for determining a first index, and the first signal is associated with the first index.

13. The second node according to any one of claims 8 to 12, comprising:
a second receiver configured to receive a third signal in the third time-frequency resource block.

14. The second node according to claim 13, wherein a third reference signal resource group is used for determining a spatial relationship of the third signal; the third reference signal resource group comprises at least one reference signal resource.

15. A method used in a first node for wireless communication, comprising:

receiving a first information set, wherein the first information set is used for determining a first time-frequency resource block and a second time-frequency resource block, the first time-frequency resource block being allocated to a first signal, and the second time-frequency resource block being allocated to a second signal;

receiving a first signaling, wherein the first signaling is used for determining a third time-frequency resource block;

quitting transmitting the first signal in the first time-frequency resource block; and

transmitting the second signal in the second time-frequency resource block, or quitting transmitting the second signal in the second time-frequency resource block,

wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; whether to quit transmitting the second signal in the second time-frequency resource block depends on the first information set.

16. The method according to claim 15, wherein whether to quit transmitting the second signal in the second time-frequency resource block depends on whether the first signal and the second signal are scheduled by the same signaling.

17. The method according to claim 15 or 16, wherein whether to quit transmitting the second signal in the second time-frequency resource block depends on whether the first signal and the second signal carry the same TB.

18. The method according to any one of claims 15 to 17, wherein any reference signal resource in the first reference signal resource group is an SRS resource, and any reference signal resource in the second reference signal resource group is an SRS resource; the first reference signal resource group belongs to a first SRS resource set, and the second reference signal resource group belongs to a second SRS resource set; the first SRS resource set and the second SRS resource set respectively comprise at least one SRS resource.

19. The method according to any one of claims 15 to 18, wherein the first signaling is used for determining a first index, and the first signal is associated with the first index.

20. The method according to any one of claims 15 to 19, comprising:
transmitting a third signal in the third time-frequency resource block.

21. The method according to claim 20, wherein a third reference signal resource group is used for determining a spatial relationship of the third signal; the third reference signal resource group comprises at least one reference signal resource.

22. A method used in a second node for wireless communication, comprising:

transmitting a first information set, wherein the first information set is used for determining a first time-frequency resource block and a second time-frequency resource block, the first time-frequency resource block being allocated to a first signal, and the second time-frequency resource block being allocated to a second signal; and

transmitting a first signaling, wherein the first signaling is used for determining a third time-frequency resource block,

wherein the first time-frequency resource block and the second time-frequency resource block overlap in a time domain, the third time-frequency resource block and the first time-frequency resource block overlap in the time domain, and the third time-frequency resource block and the second time-frequency resource block overlap in the time domain; a first reference signal resource group is used for determining a transmitting antenna port of the first signal, and a second reference signal resource group is used for determining a transmitting antenna port of the second signal; the first reference signal resource group and the second reference signal resource group respectively comprise at least one reference signal resource; a target receiver of the first information set quits transmitting the first signal in the first time-frequency resource block; the target receiver of the first information set transmits the second signal in the second time-frequency resource block, or the target receiver of the first information set quits transmitting the second signal in the second time-frequency resource block; whether to quit transmitting the second signal in the second time-frequency resource block depends on the first information set.

23. The method according to claim 22, wherein whether the target receiver of the first information set quits transmitting the second signal in the second time-frequency resource block depends on whether the first signal and the second signal are scheduled by the same signaling.

24. The method according to claim 22 or 23, wherein whether the target receiver of the first information set quits transmitting the second signal in the second time-frequency resource block depends on whether the first signal and the second signal carry the same TB.

25. The method according to any one of claims 22 to 24, wherein any reference signal resource in the first reference signal resource group is an SRS resource, and any reference signal resource in the second reference signal resource group is an SRS resource; the first reference signal resource group belongs to a first SRS resource set, and the second reference signal resource group belongs to a second SRS resource set; the first SRS resource set and the second SRS resource set respectively comprise at least one SRS resource.

26. The method according to any one of claims 22 to 25, wherein the first signaling is used for determining a first index, and the first signal is associated with the first index.

27. The method according to any one of claims 22 to 26, comprising:
receiving a third signal in the third time-frequency resource block.

28. The method according to claim 27, wherein a third reference signal resource group is used for determining a spatial relationship of the third signal; the third reference signal resource group comprises at least one reference signal resource.

100

First node

101

Receive a first information set

102

Receive first signaling

103

Quit transmitting a first signal in a first time-frequency resource block

104

Transmit a second signal in a second time-frequency resource block or quit transmitting the second signal in the second time-frequency resource block

FIG. 1

5GS/EPS 200

220

HSS/UDM

NG-RAN 202

211

MME/AMF/ SMF

214

Other MME/AMF/ SMF

201

UE

203

NR node B

230

Internet service

241

UE

204

Other NR node B

212

S-GW/UPF

213

P-GW/UPF

5GC/EPC 210

FIG. 2

Control plane 300

L3

306

RRC

L2

304

PDCP

303

RLC

302

MAC

L1

301

PHY

305

User plane 350

356

SDAP

L2

354

PDCP

353

RLC

352

MAC

L1

351

PHY

355

FIG. 3

Figure 4

Figure 5

Figure 6

Third signaling | First information subset

Fourth signaling | Second information subset

FIG. 7

Whether to quit transmitting a second signal in a second time-frequency resource block — Depends on → Whether a first signal and a second signal are scheduled by the same signaling

FIG. 8

Whether to quit transmitting a second signal in a second time-frequency resource block — Depends on → Whether a first signal and a second signal carry the same TB

FIG. 9

First SRS set

First reference signal resource group

Second SRS set

Second reference signal resource group

FIG. 10

First signaling — Used for determining → First index

FIG. 11

Third reference signal resource group — Used for determining → Spatial relation of a third signal

FIG. 12

The same reference signal resource set in M reference signal resource sets

First reference signal resource group

Third reference signal resource group

FIG. 13

1400

```
┌─────────────────────────────────────┐
│  ┌─────────────────────┐   First     │
│→ │   First receiver     │   node      │
│  │      1401            │             │
│  └─────────────────────┘             │
│            │                         │
│            ▼                         │
│  ┌─────────────────────┐             │
│← │  First transmitter   │             │
│  │      1402            │             │
│  └─────────────────────┘             │
└─────────────────────────────────────┘
```

FIG. 14

1500

```
┌─────────────────────────────────────┐
│  ┌─────────────────────┐  Second     │
│← │  Second transmitter  │  node       │
│  │      1501            │             │
│  └─────────────────────┘             │
│            │                         │
│            ▼                         │
│  ┌─────────────────────┐             │
│→ │   Second receiver    │             │
│  │      1502            │             │
│  └─────────────────────┘             │
└─────────────────────────────────────┘
```

FIG. 15

## INTERNATIONAL SEARCH REPORT

| International application No. |
|---|
| **PCT/CN2023/120648** |

**A.    CLASSIFICATION OF SUBJECT MATTER**

    H04W 72/04(2023.01)i

According to International Patent Classification (IPC) or to both national classification and IPC

**B.    FIELDS SEARCHED**

Minimum documentation searched (classification system followed by classification symbols)

    IPC:H04W; H04L; H04Q

Documentation searched other than minimum documentation to the extent that such documents are included in the fields searched

Electronic data base consulted during the international search (name of data base and, where practicable, search terms used)

    CNTXT; ENTXT; ENTXTC; WPABS; WPABSC; CIFD; IEEE; 3GPP: 时频, 时间-频率, 资源, 时域, 交叠, 交叉, 重叠, 冲突, 放弃, 选择, 指示, 参考信号, time frequency, time domain, resource, overlap, conflict, abondon, give up, select, indicate, reference

**C.    DOCUMENTS CONSIDERED TO BE RELEVANT**

| Category* | Citation of document, with indication, where appropriate, of the relevant passages | Relevant to claim No. |
|---|---|---|
| A | CN 113747587 A (SHANGHAI LANGBO COMMUNICATION TECHNOLOGY CO., LTD.) 03 December 2021 (2021-12-03) description, paragraphs [0083]-[0497], and figures 1-5 | 1-28 |
| A | CN 113543328 A (HUAWEI TECHNOLOGIES CO., LTD.) 22 October 2021 (2021-10-22) entire document | 1-28 |
| A | US 2021021394 A1 (WU LU; ZHANG XIAOBO; SHANGHAI LANGBO COMMUNICATION TECHNOLOGY CO., LTD.;) 21 January 2021 (2021-01-21) entire document | 1-28 |

| ☐ Further documents are listed in the continuation of Box C. | ☑ See patent family annex. |
|---|---|

\*    Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **20 December 2023** | **20 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120648**

| Patent document cited in search report | | | Publication date (day/month/year) | Patent family member(s) | | | Publication date (day/month/year) |
|---|---|---|---|---|---|---|---|
| CN | 113747587 | A | 03 December 2021 | None | | | |
| CN | 113543328 | A | 22 October 2021 | None | | | |
| US | 2021021394 | A1 | 21 January 2021 | US | 11770229 | B2 | 26 September 2023 |
| | | | | US | 2023379124 | A1 | 23 November 2023 |

Form PCT/ISA/210 (patent family annex) (July 2022)